# EUROPÄISCHE PATENTSCHRIFT

(11) **EP 2 151 402 B1**
(45) Veröffentlichungstag und Bekanntmachung des Hinweises auf die Patenterteilung: **12.03.2014**
(21) Anmeldenummer: 09010031.4
(22) Anmeldetag: 04.08.2009
(51) Int. Cl.: B65G 67/20, B65G 69/24

(54) **Logistiksystem**
Logistics system
Système logistique

(30) Priorität: 04.08.2008 DE 102008036067; 21.04.2009 DE 102009018237; 28.05.2009 DE 102009022990
(43) Veröffentlichungstag der Anmeldung: 10.02.2010
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ Speiser

(56) Entgegenhaltungen:
- EP-A1- 1 251 089
- DE-A1- 2 501 414
- DE-A1- 10 000 131
- FR-A1- 2 768 709
- GB-A- 381 464
- US-A- 3 938 678

## Beschreibung

Die Erfindung betrifft ein Logistiksystem zur Übergabe einer Plattform in deren Beförderungsrichtung zu einem Fahrzeug und/oder zur Übernahme einer Plattform von einem Fahrzeug nach dem Oberbegriff von Anspruch 1.

Als Stand der Technik sei auf das Dokument EP-A 1 808 387 sowie dessen Gesamtinhalt verwiesen.

Das dort offenbarte System hat sich bereits sehr erfolgreich bewährt, ist aber aus bautechnischen Gründen nicht überall umsetzbar. Dies gilt vor allem dann, wenn das dort beschriebene Logistiksystem an bereits bestehende Lager und Kommissionierungsbereiche angepasst werden soll.

In solchen Lager- und Kommissionierungsbereichen werden entweder die Plattformen gelagert, sei es bereits mit Gütern beladen oder auch unbeladen, oder die einzelnen Plattformen werden dort mit entsprechenden Gütern kommissioniert oder beladen, um dann in die Logistikkette übergeben werden zu können, was nichts anderes bedeutet, als dass Fahrzeuge, **z.** B. LKWs oder auch Züge die Plattformen übernehmen und an den nächsten gewünschten Zielort verfrachten.

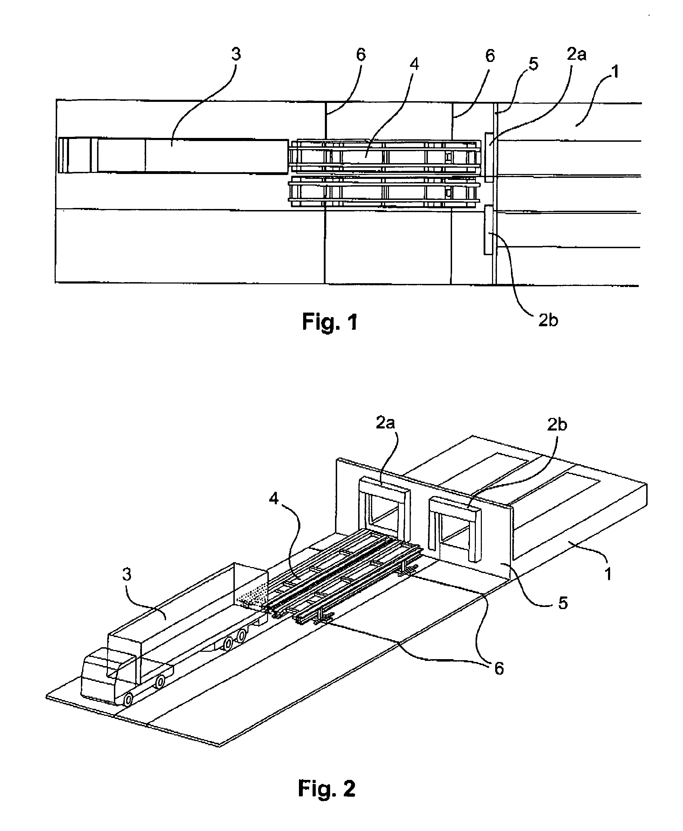

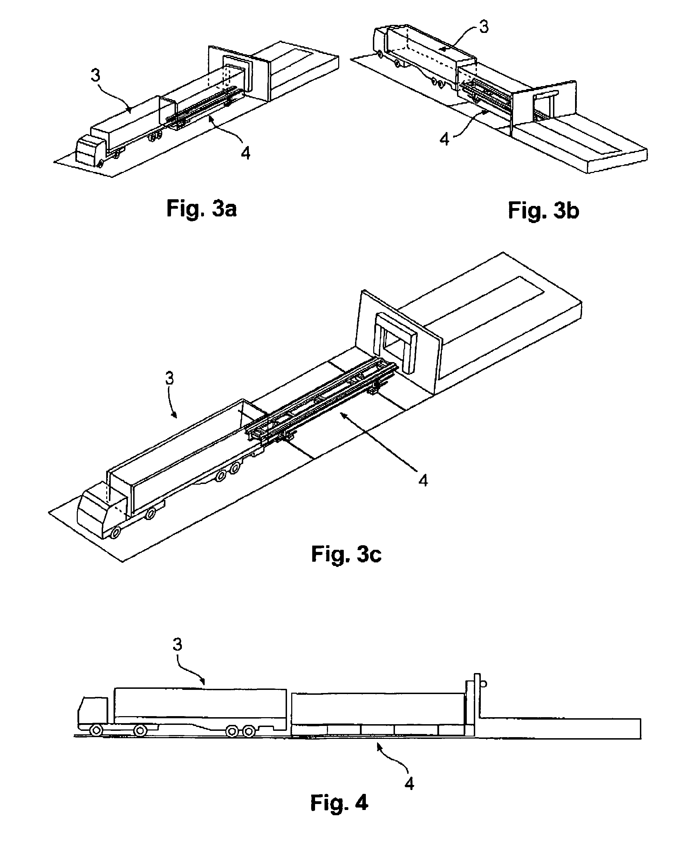

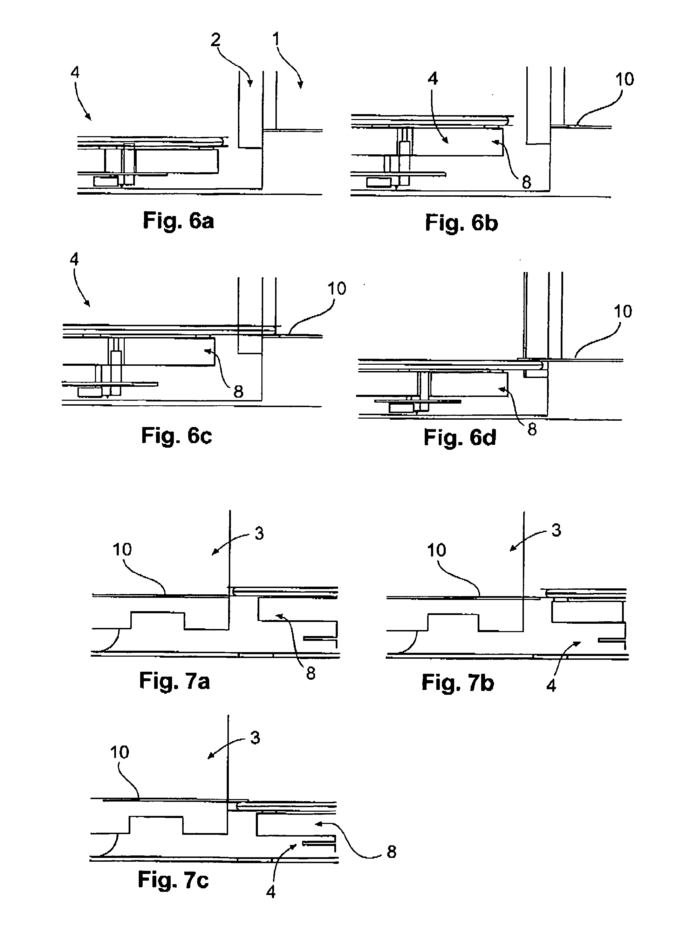

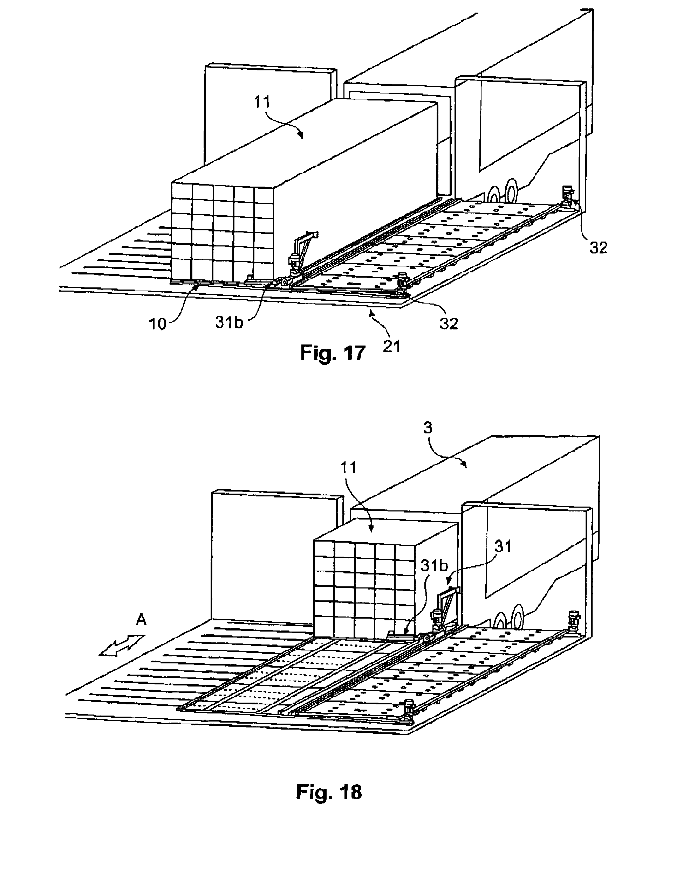

Figur 2 der EP-A 1 808 387 zeigt, dass dort ein eigenständiges Gebäude benötigt wird, um die Plattformen an die Fahrzeuge zu übergeben oder von dort zu übernehmen. Die Figuren 4 und 6 zeigen bereits wesentliche Bestandteile einer Übergabestation, welche derart verschwenkbar ist, dass sie sich auf die Ladefläche eines Fahrzeugs hin ausrichten kann und auch die weiteren Figuren 7 bis 15 zeigen wichtige Bestandteile einer Übergabestation für die Plattform. Weitere Einzelheiten der Übergabestation sind auch in den Figuren 17, 25, 26 und 29 gezeigt.

In der DE 196 35 858 A1 wird eine Vorrichtung zum seitlichen Be- und Entladen palettierter Ladeeinheiten von seitlich für Be- und Entladetechnik zugänglichen Fahrzeugen wie Lastkraftwagen, Anhänger, Eisenbahnwaggons usw. innerhalb eines automatisierten Güterumschlagssystems beschrieben. Dabei befindet sich an einer Be- und Entladestation eine Gleisanlage mit einem Verschiebewagen, der mit heb- und senkbaren Gabeln bestückt ist. Mittels der Gabeln werden mehrere Paletten seitlich zum Fahrzeug ent- und beladen. Daraufhin verfährt der Verschiebewagen parallel zur Längsrichtung des Fahrzeugs und der Ent- und Beladevorgang wird an einer weiteren Position der Ladefläche des Fahrzeugs wiederholt. Ein Erkennungs- und Meßsystem ist auf das Nutzfahrzeug und dessen Ladung ausrichtbar.

In der DE 698 03 556 T2 wird eine Eisenbahnumschlagstation zum Be- und Entladen von Eisenbahnwaggons mit Frachtbehältem beschrieben. Dabei umfasst die Eisenbahnumschlagstation einen Gleisabschnitt, auf dem die zu be- und entladenden Eisenbahnwagons an die Eisenbahnumschlagstation herangefahren werden, und wenigstens eine Belade- und/oder Entladeplattform, welche entlang des und benachbart zu dem Gleisabschnitt angeordnet ist und welche auf einem höheren Niveau als der Gleisabschnitt liegt. Die Frachtbehälter können seitlich zu beiden Seiten der Eisenbahnwagons be- und entladen werden. Dabei werden die zu be- und entladenden Eisenbahnwagons während des Be- und Entladevorgangs durch Träger von unten gestützt, um während des gesamten Be- und Entladevorgangs den Eisenbahnwagon auf einer festen, vorbestimmten Höhe zu halten.

Weiterhin ist aus der US 3,938,678 A ein Logistiksystem zur Übergabe einer Plattform in deren Beförderungsrichtung zu einem Fahrzeug und/oder zur Übernahme einer Plattform von einem Fahrzeug nach dem Oberbegriff des Anspruchs 1 bekannt, das eine Plattformsicherung der Plattform am Fahrzeug vorsieht. Zur Sicherung der Plattform auf dem Fahrzeug wird eine Mehrzahl von Verriegelungselementen von oben durch die plattform hindurch mit der Ladefläche verbunden, was eine Verkleinerung des auf dem Fahrzeug zur Vorfügung stehenden Laderaumes zur Folge hat.

Bei dem erfindungsgemäßen Logistiksystem geht es im Wesentlichen um die Übergabe von Güterplattformen, also Plattformen (Ladungsträger), auf denen Güter lagern und wobei die gesamte Plattform mit den Gütern an ein Fahrzeug übergebbar ist oder mittels der Plattform die Güter an ein Fahrzeug übergebbar sind.

Die Aufgabe der vorliegenden Erfindung besteht darin, das Logistiksystem der eingangs bezeichneten Art so weiterzuentwickeln, dass eine verbesserte Beladungseffizenz und ein verbessertes Ladehandling gewährleistet ist, ohne für die Plattformsicherung einen besonders großen baulichen Aufwand an den bisherigen Einrichtungen vorzunehmen.

Die Erfindung löst die ihr zugrundeliegende Aufgabe durch ein Logistiksystem mit den Merkmalen nach Anspruch 1. Vorteilhafte Weiterbildungen sind in den Unteransprüchen, besonders aber auch in den Zeichnungen und in der nachfolgenden Beschreibung dargestellt.

Bei bereits vorhandenen Lägern, Kommissionierungseinheiten oder dergl. gibt es eine Vielzahl von an sich bekannten Andockstationen (auch als Hallentore bezeichnet), an die die LKWs jeweils mit ihrer Rückseite heranfahren können, um die Güter zu übernehmen. Solche Güterläger oder Kommissionierungseinheiten bestehen in einer großen Vielzahl und häufig gibt es die Möglichkeit, dass eine Vielzahl von Fahrzeugen gleichzeitig an die Andockstationen, die jeweils in einer Gebäudewand miteinander fluchtend nebeneinanderliegen, heranfährt. So können ebenso viele LKWs andocken, wie entsprechende Andockstationen, also Gebäudewandöffnungen/Hallentore, vorhanden sind.

Erfindungsgemäß ist nun vorgesehen, das Logistiksystem so weiterzubilden, dass vor dem Lagergebäude, also dem Gebäude, in dem entweder die Waren oder Plattformen gelagert oder kommissioniert werden oder dergl., eine oder mehrere Übergabestationen eingerichtet werden, die bevorzugt auf einem Schienensystem lagernd parallel zur Wand des Lagers verfahrbar bzw. verschiebbar sind. Dadurch kann jede Übergabestation an jede Andockstation des Lagers, Kommissfonlerungsbereichs oder dergl. verfahren werden und von dort Plattformen (beladen oder unbeladen) aufnehmen oder auch abgeben.

Anders als bisher fahren also nicht mehr die LKWs rückwärts an die Andockstationen heran, sondern bleiben in einem bestimmten Abstand hierzu stehen, wobei der Abstand etwas größer ist als die Länge der Übergabestation, so dass diese stets entlang der Andockstation verfahrbar ist.

Ebenso bevorzugt ist es, wenn eine solche Übergabestation, die nachfolgend auch als Querverteiler bezeichnet ist, nicht nur in einer einfachen Version besteht, sondern als eine Doppelversion besteht, d. h. so ausgebildet ist, dass sie einerseits z. B. eine Leerplattform von einem LKW übernehmen kann, um danach den gesamten Querverteiler ein kleines Stück seitwärts zu verschieben, so dass eine bereits auf dem Querverteiler liegende beladene Plattform sogleich in den LKW verfrachtet werden kann, so dass keine längeren Umladezeiten für Leerplattformen zu besorgen sind.

Die vorliegende Erfindung betrifft ferner ein Logistiksystem, welches gegenüber dem Logistiksystem des Dokuments EP 1 808 387 A2 so weitergebildet ist, dass in dem Lagergebäude, in dem entweder die Waren oder Plattformen gelagert oder kommissioniert werden, eine oder mehrere Übergabestationen eingerichtet werden, durch die jeweils mehrere zwei Plattformen (beladen oder unbeladen) von einem LKW aufgenommen und/oder mehrere zwei Plattformen an einen LKW abgegeben werden können. Dabei bildet der Boden des Lagergebäudes eine Ebene mit den zu ent- und beladenden LKWs, die jeweils vor einer entsprechenden Andockstation vor dem Lagergebäude zu positionieren sind.

Somit ist es gegenüber dem Logistiksystem des Dokuments EP 1 808 387 A2 nicht erforderlich, aufwendige bauliche Veränderungen zur Aufnahme mehrere Plattformen in einem eigenen Lager vorzunehmen, sondern es kann ein vorhandenes Lagergebäude durch die einfache Montage des erfindungsgemäßen Logistiksystems auf dem Boden des Lagergebäudes umgerüstet werden. Dabei sind nur geringe Montagearbeiten vorzunehmen, was den Aufwand und die Kosten nach Arbeitszeit und Material gering hält im Vergleich zum Aufbau eines separaten mehrstöckigen Lagers mit entsprechenden Förderungseinrichtungen. Ferner kommt das erfindungsgemäße Logistiksystem mit einfachen und wenigen mechanischen Führungselementen, Antrieben, Sensoren und Steuerungselementen aus, wodurch die Kosten der Anlage gering gehalten werden.

Dennoch bietet das erfindungsgemäße Logistiksystem die Vorteile des Logistiksystem des Dokuments EP 1 808 387 A2, da es ebenfalls bei dem Be- und Entladen von LKWs mittels des erfindungsgemäßen Logistiksystems nicht mehr erforderlich ist, dass ein LKW mittels z.B. eines oder mehrerer Gabelstapler be- und/oder entladen wird, sondern das Be- und/oder Entladen der LKW mittels Plattformen in jeweils einem einzigen Arbeitsschritt vorgenommen werden kann, wodurch die Be- und Entladezeiten deutlich gesenkt und hierdurch Zeit und Kosten eingespart werden können. Dabei werden die zu beladenden Plattformen im Lagergebäude unabhängig von der Präsenz des entsprechenden LKWs beladen, so dass eine oder mehrere beladene Plattformen an der Übergabestation bereitstehen können, wenn der zu beladende LKW das Lager erreicht und vor der entsprechenden Andockstation anhält. Die bereits beladene Plattform kann in nur einem Arbeitsschritt an den LKW abgegeben werden. Auch können beladene Plattformen aus einem anliefernden LKW durch die Übergabestation in einem einzigen Arbeitsschritt aufgenommen werden, so dass die Plattform an der Übergabestation entladen werden kann, nachdem der LKW die entsprechende Andockstation bereits wieder verlassen hat.

Dabei zeichnet sich die Übergabestation des erfindungsgemäßen Logistiksystems dadurch aus, dass die Übergabestation eine Aufnahme aufweist, die mehrere Plattformen aufnehmen kann. Dabei kann jede der Plattformen von einer Aufnahme der Übergabestation zum LKW bzw. vom LKW zu der Aufnahme der Übergabestation durch eine oder mehrere in Beförderungsrichtung der Plattform wirkende Vorschubeinheiten bewegt wird. Ferner kann die Aufnahme quer zur Beförderungsrichtung der Plattform über eine in Querrichtung wirkende Vorschubeinheit verfahren werden.

Hierdurch kann die Aufnahme der Übergabestation eine erste Plattform von einem LKW aufnehmen, die Übergabestation kann dann quer zur Beförderungsrichtung verfahren und eine zweite Plattform in den LKW abgeben. Daher kann das Ent- und erneute Beladen eines LKWs in lediglich zwei Arbeitsschritten und damit deutlich schneller als mit herkömmlichen Transportvorrichtungen wie Gabeistaplern durchgeführt werden.

Ebenso kann die Aufnahme z.B. zwei Plattformen aufnehmen, die eine Plattform an einen ersten LKW abgeben, dann seitlich verfahren und die zweite Palette an einen zweiten LKW abgeben. Auch kann eine leere Aufnahme zuerst eine Plattform aus einem ersten LKW aufnehmen, dann seitlich verfahren und dann eine weitere Plattform aus einem zweiten LKW aufnehmen. So können zwei LKW in lediglich zwei Arbeitsschritten zügig be- oder entladen werden. Dabei ist es jeweils unerheblich, ob es sich um beladene oder unbeladene Plattformen handelt. Das Ent- und Beladen der entsprechenden Plattformen mit Fracht kann jeweils vor Ankunft bzw. nach Abfahrt der LKW erfolgen, d.h. die LKW müssen während des Ent- und Beladens nicht vor der Andockstation stehen bleiben.

Gemäß einem weiteren Aspekt des erfindungsgemäßen Logistiksystems weist die in Beförderungsrichtung der Plattform wirkende Vorschubeinheit einen ersten Mitnahmebügel und einen zweiten Mitnahmebügel auf. Ferner weist die Plattform eine Vielzahl von Aussparungen aufweist, in die sowohl der erste Mitnahmebügel als auch der zweite Mitnahmebügel eingreifen kann, so dass die Längsvorschubeinheit mittels des ersten Mitnahmebügels oder des zweiten Mitnahmebügels die Plattform in Beförderungsrichtung bewegen kann. Der erste Mitnahmebügel und der zweite Mitnahmebügel sind jeweils um die Achse der Beförderungsrichtung beweglich und können jeweils zwischen einer ersten aufrechten horizontalen Position und einer zweiten vertikalen Position, in der der erste Mitnahmebügel und der zweite Mitnahmebügel jeweils in eine von einer Vielzahl von Aussparungen der Plattform eingreift, bewegt werden. Hierdurch wird ein einfaches und effizientes Umsetzen der Längsbewegung der Längsvorschubeinheit in die Längsbewegung der Plattform in Beförderungsrichtung erreicht. So wird die eine Längsvorschubeinheit sowohl für die Bewegung zum LKW hin als auch vom LKW weg verwendet. Ferner wird die Längsbewegung der Längsvorschubeinheit auf einfache Art und Weise auf die zu bewegende Plattform übertragen. Auch werden zur Kopplung der Längsvorschubeinheit an die Plattform einfache und robuste mechanische Elemente verwendet, die durch die Ent- und Beladevorgänge kaum beschädigt werden können, wodurch die Zuverlässigkeit des erfindungsgemäßen Logistiksystems sichergestellt wird.

Gemäß einem weiteren Aspekt des erfindungsgemäßen Logistiksystems ist der erste Mitnahmebügel derart ausgebildet ist, dass der erste Mitnahmebügel in den Frachtraum eines LKW hineinragen und dort in eine von der Vielzahl von Aussparungen der Plattform eingreifen kann. Hierdurch wird es ermöglicht, dass die Längsvorschubeinheit eine Plattform greifen und in Beförderungsrichtung bewegen kann, die vollständig in dem Laderaum des LKWs enthalten ist. Ebenso kann die Längsvorschubeinheit die Plattform in umgekehrter Bewegungsrichtung vollständig in den leeren Laderaum des LKWs hineinschieben. In beiden Fällen sind keine sonstigen Vorschubelemente nötig, wodurch der Aufbau des erfindungsgemäßen Logistiksystems einfach gehalten werden kann.

Gemäß einem weiteren Aspekt des erfindungsgemäßen Logistiksystems kann sich die Längsvorschubeinheit auf der Aufnahme in Beförderungsrichtung bewegen. Hierdurch wird es ermöglicht, die Längsvorschubeinheit zwischen den beiden Seiten der Plattform in Beförderungsrichtung hin und her zu bewegen, auch wenn entweder einer Aufnahme oder in beiden Aufnahmen der Übergabestation eine beladene Plattform vorhanden ist, oder sogar jeweils eine beladene Plattform vorhanden ist. So wird die Blockierung oder Behinderung der Bewegung der Längsvorschubeinheit durch eine oder zwei beladene Plattformen vermieden.

Gemäß einem weiteren Aspekt des erfindungsgemäßen Logistiksystems besteht die quer zur Beförderungsrichtung wirkende Vorschubeinheit aus zwei Vorschubeinheiten, die an der Aufnahme an gegenüberliegenden Seiten in Beförderungsrichtung vorgesehen sind. Hierdurch wird eine gleichmäßige Antriebskraft auf die zu bewegende Aufnahme ausgeübt, sodass ein Verkanten oder Verkeilen der Aufnahme gegenüber der Übergabestation vermieden werden kann.

Gemäß einem weiteren Aspekt des erfindungsgemäßen Logistiksystems ist die Übergabestation als Teil einer Verladerampe ausgebildet. Hierdurch können die Elemente der Übergabestation auf dem Boden des Lagergebäudes einfach montiert werden und es sind keine aufwendigen und kostspieligen Baumaßnahmen zur Umsetzung des erfindungsgemäßen Logistiksystems erforderlich. Die feste Montage ist einfache und günstig.

Gemäß einem weiteren Aspekt des erfindungsgemäßen Logistiksystems ist die Aufnahme mittels eines Schienensystems in der Richtung quer zur Beförderungsrichtung verfahrbar ist und die Verfahrbewegung wird durch das Schienensystem durchgeführt. Hierdurch wird eine höhere Flexibilität des erfindungsgemäßen Logistiksystems erreicht, da die Übergabestation zwischen mehreren Andockstationen verfahren werden kann. Auch kann ein LKW durch die Übergabestation bedient werden, der an einer falschen Andockstation steht, ohne dass ein erneutes Umrangieren des LKWs nötig ist. Ferner kann in dieser Ausführung des erfindungsgemäßen Logistiksystems auf die Quervorschubeinheit verzichtet werden, da die Verfahrbewegung quer zur Beförderungsrichtung durch das Schienensystem durchgeführt werden kann. Hierdurch kann das erfindungsgemäße Logistiksystem vereinfacht und Kosten reduziert werden.

Gemäß einem weiteren Aspekt des erfindungsgemäßen Logistiksystems wird ein Rammbock unterhalb der schienenverfahrbaren Übergabestation derart angeordnet, dass eine Kollision des LKWs mit der Übergabestation sicher verhindert werden kann ohne die Verfahrmöglichkeiten des Schienensystems, der Übergabestation und der Plattform einzuschränken. Hierdurch wird die Übergabestation vor Beschädigung bei Rangieren des zu ent- bzw. beladenden LKWs bewahrt.

Die vorliegende Erfindung betrifft ferner ein Logistiksystem mit einer Übergabestation, die an ihrer dem LKW zugewandten Seite mindestens einen Abstandssensor auf. Mittels dieses Sensors kann der Abstand der Rückseite des LKWs zu der Anbringungsstelle des Sensors bestimmt werden. Hierdurch ist eine Überwachung der Heranfahrbewegung des LKWs an die Andockstation bzw. die Übergabestation möglich, da ein gemessener Abstandswert über den verbleibenden Abstandswert zwischen LKW und Andockstation bzw. Übergabestation zur Verfügung steht.

Gemäß einem weiteren Aspekt des erfindungsgemäßen Logistiksystems weist der Rammbock an seiner dem LKW zugewandten Seite mindestens zwei Abstandssensoren aufweist, um mindestens zwei Abstände zwischen Rammbock und LKW zu bestimmen. Aus diesen mindestens zwei bestimmten Abständen wird die Differenz bestimmt. Über diese Differenz kann die Schiefstellung des LKWs gegenüber dem Rammbock und damit auch gegenüber der Übergabestation bestimmt werden. Auf diese Art und Weise kann durch die beiden bestimmten Abstände oder auch nur durch einen der beiden bestimmten Abstände das Heranfahren des LKWs an die Andockstation bzw. die Übergabestation überwacht werden. Ferner kann gleichzeitig die Schiefstellung ermittelt werden, sodass eine Korrektur der Schiefstellung, d.h. ein Ausgleichen der Schiefstellung, so dass die Differenz zwischen den mindestens zwei bestimmten Abstände minimiert wird, noch während des Heranfahrens ermöglicht wird.

Gemäß einem weiteren Aspekt des erfindungsgemäßen Logistiksystems wird dem Fahrer des LKW der bestimmte Abstand bzw. mindestens einer der mindestens zwei bestimmten Abstände angezeigt. Zusätzlich oder alternativ wird dem Fahrer des LKWs der Mittelwert der mindestens zwei bestimmten Abstände und bzw. oder die bestimmte Differenz der mindestens zwei bestimmten Abstände angezeigt. Schließlich kann dem Fahrer des LKW auch zusätzlich oder alternativ die Lenkrichtung angezeigt werden, die einzuschlagen ist, um die bestimmte Differenz der mindestens zwei bestimmten Abstände zu minimieren. Durch eine oder mehrere oder alle dieser angezeigten Informationen wird es dem Fahrer des LKW erleichtert, rückwärts an die Andockstation oder die Übergabestation so heranzufahren, dass der LKW in einem möglichst geringen Abstand von der Andockstation oder der Übergabestation zum Halten kommt und bzw. oder die Schiefstellung des LKWs gegenüber der Andockstation oder der Übergabestation minimiert wird. Hierdurch wird ein korrektes Positionieren des LKWs hinsichtlich der Übergabe der Plattform dahingehend ermöglicht, da die Plattform auf die Maße der Ladefläche des LKWs angepasst ist und schon eine geringe Schiefstellung dazu führen kann, dass die Plattform durch die Übergabestation nicht von dem LKW übernommen bzw. an den LKW übergeben werden kann. In diesem Fall ist der LKW derart umzurangieren, bis eine einwandfreie Orientierung des LKWs gegenüber der Übergabestation erreicht ist. Da dieses Umrangieren zeitaufwendig ist, kann durch die Anzeige entsprechender Informationen das Rangieren an die Andockstation oder Übergabestation heran erleichtert und damit Zeit gespart werden.

Die vorliegende Erfindung betrifft ferner ein Logistiksystem mit einer Übergabestation mit einem Positionsfinder, der an der Übergabestation unterhalb der Aufnahme in Beförderungsrichtung an der Seite der Übergabestation vorgesehen ist, an der der LKW zu positionieren ist, um die Plattform zu übernehmen oder zu übergeben. Dabei weist der entsprechende LKW an seiner Rückseite unterhalb der Ladefläche einen Reflektor auf. Mittels des Positionsfinders wird der Reflektor an dem LKW erkannt und während des Heranfahrens des LKWs an die Übergabestation verfolgt. Dabei wird durch den Positionsfinder eine zweidimensionale Ebene erkannt, die vertikal und quer zur Beförderungsrichtung der Plattform verläuft. Auf diese Weise lässt sich mit einfachen Mittel die Ausrichtung der Ladefläche des LKWs zur Übergabestation bestimmen, wenn die Position des Reflektors an der Rückseite des LKWs bekannt ist, da am LKW lediglich ein Reflektor an einer bestimmten Position angebracht werden muss. Somit können auf einfache Art und Weise die vertikale Position und die Querposition der Ladefläche relativ zur Übergabestation bestimmt werden.

Gemäß einem weiteren Aspekt des erfindungsgemäßen Logistiksystems sind der Positionsfinder an der Übergabestation und der Reflektor an dem LKW sich so direkt in Beförderungsrichtung gegenüberliegend angebracht sind, dass die Aufnahme zur Ladefläche des LKWs so ausgerichtet ist, um die Plattform zu übernehmen oder zu übergeben. Hierdurch wird erreicht, dass mittels des Positionsfinders und des Reflektors eine möglichst genaue Positionierung von Übergabestation und Ladefläche des LKWs zueinander möglich ist. Diese ist für die Übergabe und Übernahme der Plattform zum und vom LKW wichtig, da die Plattform entsprechend der Abmaße der Ladefläche des LKWs ausgelegt ist und schon bei einer geringfügigen Fehlpositionierung die Übernahme und Übergabe nicht mehr möglich ist, ohne den LKW durch Umrangieren erneut vor der Übergabestation zu positionieren.

Gemäß einem weiteren Aspekt des erfindungsgemäßen Logistiksystems ist die Übergabestation dazu ausgestaltet, sich mittels Vorschubeinheiten quer zur Beförderungsrichtung und vertikal zur Beförderungsrichtung so zu bewegen, dass die Aufnahme zur Ladefläche des Fahrzeugs ausgerichtet wird. Hierdurch kann auf ein umständliches und zeitkostendes Umrangieren eines fehlpositionierten LKWs verzichtet werden, da die Fehlpositionierung in der vertikalen Richtung und der Querrichtung zur Beförderungsrichtung durch die Übergabestation in einem gewissen Maße selbst ausgeglichen werden kann. Hierdurch wird eine Zeitersparnis bei fehlpositionierten LKWs erreicht.

Die vorliegende Erfindung betrifft ferner ein Logistiksystem mit einer Übergabestation mit einem Lichtgitter, das in Beförderungsrichtung vor der Seite der Übergabestation vorgesehen ist, an der der LKW zu positionieren ist, um die Plattform zu übernehmen oder zu übergeben. Das Lichtgitter ist derart in der Richtung quer zur Beförderungsrichtung beabstandet, dass der LKW mit seinem Aufbau rückwärts in das Lichtgitter hineinfahren kann. Hierdurch wird es mittels einfacher Mittel ermöglicht, den Abstand zwischen der Rückseite des LKWs und der Übergabestation während des Rückwärtsheranfahrens zu bestimmen und zu überwachen, damit eine Kollision zwischen LKW und Übergabestation verhindert werden kann.

Gemäß einem weiteren Aspekt des erfindungsgemäßen Logistiksystems weist die Übergabestation eine Signaleinrichtung auf. Mittels der Signaleinrichtung kann angezeigt werden, wenn der LKW mit seinem Aufbau rückwärts in den Erfassungsbereich des Lichtgitters hineingefahren ist, wenn der LKW im Erfassungsbereich des Lichtgitters seine Position erreicht hat, um die Plattform zu übernehmen oder zu übergeben, und wenn der LKW über die Position hinaus, in der die Plattform zu übernehmen oder zu übergeben ist, in Beförderungsrichtung auf die Übergabestation zu bewegt. Hierdurch kann dem Fahrer, der die Signaleinrichtung einsehen kann, z.B. mittels farblicher Signale angezeigt werden, ob der LKW noch weiter zurückzufahren ist, ob der LKW seine Endposition bereits erreicht hat oder ob der LKW sogar über diese Endposition hinausgefahren ist und die Gefahr eine Kollision des LKWs mit der Übergabestation besteht. Dabei kann z.B. mittels eines gelben Ampelsignals angezeigt werden, dass sich der LKW mit seinem Aufbau rückwärts in dem Erfassungsbereich des Lichtgitters befindet, mittels eines roten Ampelsignals, dass die Position erreicht ist, um die Plattform zu übernehmen oder zu übergeben, und mittels eines roten blinkenden Ampelsignals, dass der LKW bereits über die Endposition hinausgefahren ist. Auf diese Art und Weise kann mittels einfacher Signaltechnik dem Fahrer des LKWs der Abstand zu seiner endgültigen Position angezeigt werden.

Die vorliegende Erfindung betrifft ferner ein Logistiksystem mit einer Übergabestation mit einem mehrdimensionalen Laserscanner, der in Beförderungsrichtung vor der Seite der Übergabestation vorgesehen ist, an der das Fahrzeug zu positionieren ist, um die Plattform zu übernehmen oder zu übergeben. Mittels eines derartigen mehrdimensionalen Laserscanners lässt sich der Bereich vor der Übergabestation in Beförderungsrichtung, in dem der zu be- und entladende LKW zu positionieren ist, dahingehend überwachen, dass Hindernisse auf dem Boden ebenso erkannt werden können wie Personen in diesem Bereich, die durch einen rückwärts an die Übergabestation heranfahrenden LKW gefährdet wären.

Die vorliegende Erfindung betrifft ferner ein Logistiksystem mit einer Übergabestation, die einen Positionsfinder und der LKW einen Reflektor wie oben beschrieben aufweist, und/oder die ein Lichtgitter wie oben beschrieben aufweist, und/oder die einen mehrdimensionalen Laserscanner wie oben beschrieben aufweist. Durch die Kombination von zwei oder allen drei dieser Überwachungsmittel kann das Rückwärtsheranfahren des zu be- und entladenden LKWs hinsichtlich der genannten Aspekte auf einfache Art und Weise überwacht werden, so dass die einzelnen Vorteile der jeweiligen Überwachungsmittel kombiniert werden.

Die vorliegende Erfindung betrifft ferner ein Logistiksystem mit einer Übergabestation, die mindestens eine Kette aufweist, um eine Plattform in Beförderungsrichtung zu bewegen. Dabei weist die Kette mehrere Mitnahmelaschen, mehrere Kettenbolzen und mehrere verlängerte Kettenbolzen aufweist. Ferner weist die Übergabestation mindestens eine seitliche Kettenführung aufweist, um die Kette seitlich in Beförderungsrichtung zu stabilisieren. Die Kette besteht aus einzelnen Kettengliedern, die mittels eines Zahnrads umlaufend bewegt werden. Dabei werden die Kettenglieder durch die Kettenbolzen und die Mitnehmerlaschen miteinander verbunden. Die verlängerten Kettenbolzen dienen dabei nicht nur zur Verbindung der Kettenglieder mit den Mitnehmerlaschen, sondern auch zum Eingriff in entsprechende Gegenelemente der Plattform, um diese zu bewegen. Die Kette verläuft dabei in einer entsprechenden Vertiefung der Übergabestation in Beförderungsrichtung. Die Vertiefung ist derart zu dimensionieren, dass die Breite der Vertiefung mindestens der Breite des breitesten Elements der Kette entspricht. Dies sind die verlängerten Kettenbolzen, die deutlich breitet als die übrigen Kettenbolzen sind. Daher ist im Bereich der übrigen Kettenbolzen ein signifikanter Abstand zwischen den Seiten der Vertiefung und den Kettenbolzen und Mitnehmerlaschen vorhanden. Hierdurch kann - gerade bei Belastung der Kette durch die Mitnahme der Plattform - es zu einem seitlichen Abkippen der Kette und sogar zu einem Abspringen der Kette von dem Zahnrad kommen, wodurch die Übergabestation die Plattform nicht mehr weiter bewegen könnte.

Um ein derartiges seitliches Abkippen der Kette zu vermeiden, sind seitliche Kettenführungen vorgesehen, die die Vertiefung derart verengen, dass die Bewegung der Ketten mit seinen Elementen nicht beeinträchtigt wird, allerdings die Vertiefung lediglich eine Breite aufweist, die nur unwesentlich breiter ist als die Breite der Mitnehmerlaschen.

Hierbei ist auf jeder Seite der Kette eine seitliche Kettenführung vorzusehen. Auf diese Weise können die Mitnehmerlaschen auf einfache Art und Weise seitlich stabilisiert werden.

Gemäß einem weiteren Aspekt des erfindungsgemäßen Logistiksystems ist die seitliche Kettenführung so ausgebildet, dass die Mitnahmelaschen durch die seitliche Kettenführung gestützt werden und die Kettenbolzen und die verlängerten Kettenbolzen durch die seitlichen Kettenführung hindurch laufen. Hierzu ist die seitliche Kettenführung derart ausgebildet, dass die seitliche Kettenführung auf der Seite der Kette, an der die verlängerten Kettenbolzen über die übrigen Kettenbolzen hinausragen, ein U-Profil besitzt, das mit seiner Öffnung zur Kette ausgerichtet vorgesehen ist, so dass die verlängerten Kettenbolzen durch das U-Profil hindurch laufen und die Mitnehmerlaschen durch die beiden vorstehenden Kanten des U-Profils gestützt werden. Auf der anderen Seite der Kette, an der die verlängerten Kettenbolzen nicht hervorragen, kann das U-Profil flacher ausgelegt werden, da die übrigen Kettenbolzen nur unwesentlich über die Mitnehmerlaschen hinausragen. Auch auf dieser Seite der Kette werden die Mitnehmerlaschen durch die vorstehenden Kanten des U-Profils gestützt.

Die vorliegende Erfindung betrifft ferner ein Logistiksystem mit einer Übergabestation zur Übergabe bzw. Übernahme einer Plattform in deren Beförderungsrichtung zu einem LKW bzw. von einem LKW, wobei die Plattform mehrere Räder aufweist, um auf diesen Rädern in Beförderungsrichtung verfahren zu werden. Dabei ist die Plattform derart ausgestaltet, dass die Räder in entsprechenden Radkästen auf der Unterseite der Plattform in die Plattform eingelassen sind. Hierdurch kann die Höhe der Plattform sehr gering gehalten werden, die die Räder unterhalb der Plattform nur geringfügig hervorstehen.

Gemäß einem weiteren Aspekt des erfindungsgemäßen Logistiksystems ist die Plattform derart ausgebildet, dass die Plattform mit Rädern und Radkästen eine Gesamthöhe von höchstens 60 mm besitzt. Hierdurch ist die Plattform derart gering in der Höhe dimensioniert, dass sie kaum Platz auf der Ladefläche eines LKWs einnimmt und daher das Volumen der Ladefläche eines LKWs durch das erfindungsgemäße Logistiksystem kaum verringert wird.

Die vorliegende Erfindung betrifft ferner ein Logistiksystem zur Übergabe einer Plattform in deren Beförderungsrichtung zu einem Fahrzeug und bzw. oder zur Übernahme einer Plattform von einem Fahrzeug mit einer Plattformsicherung, um die Plattform mit dem LKW zu fixieren. Dabei weist die Plattformsicherung eine Aussparung an der Plattform an der Seite in Beförderungsrichtung auf, mit der die Plattform zu der Öffnung der Ladefläche des Fahrzeugs gerichtet ist. Ferner weist die Plattformsicherung einen Befestigungseinsatz an dem Fahrzeug an der Öffnung der Ladefläche in Beförderungsrichtung und ein abnehmbares Verriegelungselement mit einem Riegel auf. Dabei kann wird das abnehmbare Verriegelungselement in den Befestigungseinsatz des Fahrzeugs so eingeführt werden, dass der Riegel des abnehmbaren Verriegelungselements in die Aussparung der Plattform eingreift. Auf diese Weise kann die Plattform, die beweglich aufgeführt ist, nach dem Ent- und Beladen gesichert werden, um während der Fahrt des LKWs nicht zu verrutschen. Dabei ist die Plattformsicherung mittels einfacher mechanischer Elemente ausgeführt. Ferner sind an der Plattform und am LKW nur geringe Veränderungen notwendig, um einen sicheren Halt der Plattform zu gewährleisten.

Die vorliegende Erfindung betrifft ferner ein Logistiksystem zur Übergabe einer Plattform in deren Beförderungsrichtung zu einem Fahrzeug und bzw. oder zur Übernahme einer Plattform von einem Fahrzeug, wobei das Logistiksystem eine Übergabestation mit einer Aufnahme für mindestens eine Plattform aufweist, um eine Plattform in Beförderungsrichtung von dem Fahrzeug zu übernehmen oder dorthin zu übergeben. Dabei weist das Fahrzeug eine Laserstrahlquelle auf. Ferner weist die Übergabestation eine erste Markierungsaufnahme und eine zweite Markierungsaufnahme auf, wobei die erste Markierungsaufnahme derart ausgestaltet ist, dass der Laserstrahl der Laserstrahlquelle durch die erste Markierungsaufnahme hindurchtritt und auf die zweite Markierungsaufnahme auftrifft.

Gemäß einem weiteren Aspekt des erfindungsgemäßen Logistiksystems ist die Laserstrahlquelle an Rückseite oder Seitenfläche der Ladefläche des Fahrzeugs derart vorgesehen ist, dass der Laserstrahl der Laserstrahlquelle rechtwinklig zur Rückseite der Ladefläche des Fahrzeugs abgegeben wird. Hierdurch wird sichergestellt, dass der Laserstrahl zur Ausrichtung von Fahrzeugladefläche und Übergabestation in der Höhe, seitlich und Winkellage zueinander geeignet ist, um eine Übergabe von Plattformen zwischen Fahrzeug und Übergabestation zu ermöglichen. Da die Maße der Plattform den Maßen der Ladefläche des Fahrzeugs entsprechen, ist gerade eine möglichst exakte Ausrichtung um die Hochachse der Übergabestation von großer Bedeutung, da es sonst zu einem Verklemmen der Plattform während des Übergabevorgangs kommen kann.

Gemäß einem weiteren Aspekt des erfindungsgemäßen Logistiksystems weist die erste Markierungsaufnahme in horizontaler Richtung mehrere Höhenmarkierungen und in vertikaler Richtung mindestens eine Seitenmarkierung auf, die für den Laserstrahl der Laserstrahlquelle durchlässig sind, und die zweite Markierungsaufnahme ist für den Laserstrahl der Laserstrahlquelle undurchlässig.

Durch diese Anordnung von Laserstrahlquelle, erster und zweiter Markierungsaufnahme wird eine genaue Ausrichtung zwischen der Ladefläche des Fahrzeugs und der Aufnahme der Übergabestation auf einfache und kostengünstige Art und Weise ermöglicht. Dabei ist die Laserquelle an einer definierten Position hinsichtlich ihrer Höhe gegenüber der Ladefläche des Fahrzeugs sowie ihrer seitlichen Positionierung vorzusehen. Wird nun ein mit einer derartigen Laserquelle versehenes Fahrzeug rückwärts an eine Übergabestation herangefahren und grob positioniert und ausgerichtet vor der Übergabestation abgestellt, so kann nun die Feinpositionierung und -ausrichtung der Übergabestation gegenüber dem Fahrzeug mittels der beiden Markierungsaufnahmen der Übergabestation erfolgen. Um diese Positionierung und Ausrichtung vorzunehmen, sind entsprechende Antriebe und Führungen an der Übergabestation vorzusehen, die zumindest ein seitliches Verschieben der Übergabestation gegenüber dem Fahrzeug, eine Veränderung der Höhe der Aufnahme der Übergabestation sowie ein Schwenken der Übergabestation um ihre Hochachse ermöglichen. Dabei wird nun erfindungsgemäß der Laserstrahl auf die erste Markierungsaufnahme treffen. Die erste Markierungsaufnahme ist bis auf einige Markierungen undurchsichtig ausgebildet, sodass der Laserstrahl von der ersten Markierungsaufnahme absorbiert wird und dort einen Laserpunkt ausbildet - auf der zweiten Markierungsaufnahme ist kein Laserpunkt zu sehen. Nun kann die Übergabestation in der Höhe und zur Seite so verfahren werden, dass der Laserstrahl durch eine der Höhenmarkierung und die Seitenmarkierung der ersten Markierungsaufnahme hindurchtritt und auf der zweiten Markierungsaufnahme einen Laserpunkt ausbildet. Hierdurch kann die Übergabestation auf einfache Art und Weise in der Höhe ausgerichtet werden, da die verschiedenen Höhenmarkierungen der ersten Markierungsaufnahme verschiedene Höhen der Übergabestation gegenüber dem Fahrzeug markieren.

Gemäß einem weiteren Aspekt des erfindungsgemäßen Logistiksystems tritt der Laserstrahl der Laserstrahlquelle, wenn er durch eine der Höhenmarkierungen und bzw. oder eine Seitenmarkierung der ersten Markierungsaufnahme hindurchtritt, auf die zweite Markierungsaufnahme auf und bildet dort einen Laserpunkt ab. Ferner wird der Laserstrahl der Laserstrahlquelle, wenn er auf die erste Markierungsaufnahme auftritt ohne durch eine der Höhenmarkierungen und bzw. oder eine Seitenmarkierung der ersten Markierungsaufnahme hindurchzutreten, von der erste Markierungsaufnahme vollständig absorbiert. Hierdurch wird erreicht, daß auf der zweiten Markierungsaufnahme klar und deutlich unterschieden werden kann, ob der Laserstrahl durch eine der Höhen- und bzw. oder Seitenmarkierungen der ersten Markierungsaufnahme hindurchtritt oder nicht. Da die Ausrichtung der Übergabestation gegenüber dem Fahrzeug aufgrund dieses Laserstrahls erfolgt, ist es wichtig, dass dieser Laserstrahl bzw. der Laserpunkt, der auf der zweiten Markierungsaufnahme von dem Laserstrahl ausgebildet wird, klar und eindeutig vom Bediener, der den Ausrichtevorgang durchführt, wahrgenommen werden kann.

Gemäß einem weiteren Aspekt des erfindungsgemäßen Logistiksystems weist die erste Markierungsaufnahme in horizontaler Richtung drei Höhenmarkierungen auf, und der Abstand zwischen der unteren und der mittleren Höhenmarkierung sowie der Abstand zwischen der mittleren und der oberen Höhenmarkierung entspricht der Höhe einer Plattform. Dieser Abstand zwischen den Höhenmarkierungen der ersten Markierungsaufnahme trägt dem Umstand Rechnung, dass auf der Ladefläche des Fahrzeugs und in der Aufnahme der Übergabestation eine oder mehrere Plattformen übereinander angeordnet werden können, die einzeln oder mehrere übereinander zwischen Fahrzeug und Übergabestation übergeben werden. Da der Abstand der Höhenmarkierungen der Höhe dieser Plattformen entspricht, kann auch der Abstand zwischen Ladefläche des Fahrzeugs und Aufnahme der Übergabestation auf ein ganzzahliges vielfaches der Plattform höhe eingestellt werden.

Gemäß einem weiteren Aspekt des erfindungsgemäßen Logistiksystems trifft der Laserstrahl der Laserstrahlquelle dann durch die mittlere Höhenmarkierung der ersten Markierungsaufnahme auf die zweite Markierungsaufnahme auf und bildet dort einen Laserpunkt ab, wenn sich die Ladefläche des Fahrzeugs und die Aufnahme der Übergabestation auf der gleichen Höhe befinden. Hierdurch wird eine Ausrichtung in der Höhe von Ladefläche des Fahrzeugs und Aufnahme der Übergabestation zueinander für den Fall auf einfache Art und Weise ermöglicht, dass eine Plattform zwischen Fahrzeug und Übergabestation übergeben werden soll, da jeweils eine weitere Markierung oberhalb und unterhalb der mittleren Markierung vorhanden ist, die um die Höhe einer Plattform von der mittleren Markierung verschoben ist.

Gemäß einem weiteren Aspekt des erfindungsgemäßen Logistiksystems weist die erste Markierungsaufnahme eine Seitenmarkierung und die zweite Markierungsaufnahme eine Seitenmarkierung auf. Dabei trifft der Laserstrahl der Laserstrahlquelle dann durch die Seitenmarkierung der ersten Markierungsaufnahme auf die Seitenmarkierung der zweiten Markierungsaufnahme auf und bildet dort einen Laserpunkt ab, wenn das Fahrzeug in der Flucht mit der Übergabestation ausgerichtet ist. Durch diese beiden Seitenmarkierungen, die mittels des Laserstrahls in Deckung zueinander zu bringen sind, um die Ladefläche des Fahrzeugs und die Aufnahme der Übergabestation in Verlängerung zueinander auszurichten, wird auf einfache Art und Weise die Ausrichtung mittels "Kimme und Korn" umgesetzt. So liegen nur dann Laserstrahlquelle an der Rückseite des Fahrzeugs, erste Seitenmarkierung der ersten Markierungsaufnahme und zweite Seitenmarkierung der zweiten Markierungsaufnahme in einer Linie zueinander, was an der Abbildung des Laserpunktes auf der Seitenmarkierung der zweiten Markierungsaufnahme leicht nachzuvollziehen ist, wenn die Ladefläche des Fahrzeugs und die Aufnahme der Übergabestation zueinander in Flucht ausgerichtet sind.

Gemäß einem weiteren Aspekt des erfindungsgemäßen Logistiksystems ist eine Seitenmarkierung der ersten Markierungsaufnahme derart ausgebildet, die Farbe des Laserstrahl der Laserstrahlquelle so zu verändern, dass der Laserpunkt, der von dem Laserstrahl der Laserstrahlquelle auf der zweiten Markierungsaufnahme ausgebildet wird, durch seine Farbe anzeigt, ob er durch eine Seitenmarkierung der ersten Markierungsaufnahme hindurchgetreten ist oder nicht. Durch diese farbige Kennzeichnung der Laserstrahl kann auf der zweiten Markierungsaufnahme einfach erkannt werden, ob der Laserstrahl durch eine der durchlässigen Höhenmarkierungen der ersten Markierungsaufnahme hindurchtritt oder ob der Laserstrahl durch eine Seitenmarkierung der ersten Markierungsaufnahme hindurchtritt. Hierdurch ist eine Unterscheidung dieser Markierungen durch die Farbe des Laserpunktes auf der zweiten Markierungsaufnahme auf einfache und sichere Art und Weise möglich.

Die vorliegende Erfindung betrifft ferner ein Logistiksystem zur Übergabe einer Plattform in deren Beförderungsrichtung zu einem Fahrzeug und bzw. oder zur Übernahme einer Plattform von einem Fahrzeug, wobei das Logistiksystem eine Übergabestation mit einer Aufnahme für mindestens eine Plattform aufweist, um eine Plattform in Beförderungsrichtung von dem Fahrzeug zu übernehmen oder dorthin zu übergeben. Die Plattform weist auf ihrer Oberseite mehrere Laufflächen und an ihrer Unterseite mehrere Räder auf, wobei die Laufflächen und die Räder derart übereinander angeordnet sind, dass die Räder einer Plattform auf den Laufflächen einer anderen Plattform laufen, wenn die eine Plattform über die andere Plattform befördert wird. Hierdurch ist die Plattform derart ausgebildet, dass Beschädigungen und Abnutzungen der Oberfläche der Plattform, auf der die zu befördernde Fracht kommissioniert wird, dahingehend vermieden bzw. zumindest reduziert wird, dass die Oberfläche der Plattform nicht durch die Laufrollen bzw. Räder einer weiteren Plattform beschädigt oder abgenutzt wird, wenn zwei Plattformen übereinander befördert werden. Die Oberfläche einer Plattform wird im Allgemeinen vollständig aus einem Material wie z.B. Holz gefertigt. Wird nun eine Plattform über eine weitere Plattform befördert, kann es auf der hölzernen Oberfläche der unteren Plattform durch die Räder bzw. Laufrollen der oberen Plattform zu Abrieb kommen, sowohl der hölzernen Oberfläche als auch der Laufrollen, welche im Allgemeinen aus einem Material wie Kunststoff oder Gummi gefertigt werden. Hierdurch kommt es zu Verschleiß an der Oberfläche sowie an den Laufrollen, welche entsprechend erneuert werden müssen. Auch kann sich aufgrund des Verschleißes der Kraftaufwand für die Bewegung der Plattformen erhöhen. Ferner kann auch die hölzerne Oberfläche der Plattform durch das Kommissionieren durch z.B. einen Gabelstapler oder ähnliche Geräte beschädigt oder abgenutzt werden, so dass in dem Bereich, über den die Laufrollen einer anderen Plattform laufen, Holzteile ausbrechen können und Vertiefungen bilden oder auch Holzteile nach Oben hervorstehen und hierdurch Hindernisse darstellen. In beiden Fällen wird durch die Unebenheit der hölzernen Oberfläche die Bewegung einer Plattform über eine andere erschwert. Daher ist es vorteilhaft, diesen Bereich der Plattformen, über den die Laufrollen einer anderen Plattformen laufen, aus einem Material vorzusehen, dass weniger beschädigt werden kann und sich weniger abnutzt, um den Verschleiß der Laufflächen und Laufrollen zu verringern und sicherzustellen, dass durch die Abnutzung oder Beschädigung der Oberfläche der Plattform keine Behinderungen der Beförderungsbewegung entsteht.

Gemäß einem weiteren Aspekt des erfindungsgemäßen Logistiksystems sind an den seitlichen Außenkanten der Plattform Zurrpunkte zum Sichern der Fracht vorgesehen. Ferner sind zusätzlich oder alternativ in den Laufflächen Zurrpunkte zum Sichern der Fracht vorgesehen. Auch sind zusätzlich oder alternativ an den Stirnkanten der Plattform Aussparungen zur Aufnahme einer Plattformsicherung vorgesehen. Durch diese Zurrpunkte können an der Plattform Befestigungsmittel auf platzsparende Art und Weise angebracht werden, um die Fracht in Beförderungsrichtung und in Querrichtung durch z.B. Spanngurte zu sichern. Ferner dienen die Aussparungen der Sicherung der Plattform auf der Ladefläche des Fahrzeugs.

Gemäß einem weiteren Aspekt des erfindungsgemäßen Logistiksystems sind die Räder in entsprechenden Radkästen auf der Unterseite der Plattform in die Plattform eingelassen vorgesehen, und pro Radkasten sind zwei Räder vorgesehen, die in Beförderungsrichtung nebeneinander angeordnet sind. Dadurch, dass zwei Räder statt lediglich einem Rad pro Radkasten vorgesehen sind, kann der Durchmesser jedes Rades bzw. jeder Laufrolle weiter verringert werden, so dass die Höhe der Plattform, die im Wesentlichen durch den Durchmesser der Räder bzw. Laufrollen bestimmt wird, ebenfalls entsprechend verringert werden kann und dennoch die gleiche Last von der Gesamtheit der Räder aufgenommen werden kann. Ferner können hierdurch mehr Räder bzw. Laufrollen an der Unterseite der Plattform vorgesehen werden, die entsprechend einen geringeren Abstand zueinander aufweisen. Hierdurch liegen auch die Kontaktpunkte der Plattform mit dem Untergrund, also die Kontaktpunkte der Räder bzw. Laufrollen, dichter bei einander, so dass bei der Übergabe von der Aufnahme der Übergabestation zur Ladefläche des Fahrzeugs schneller die Gewichtskraft der Plattform und Fracht durch mehrere Räder übergeben wird. Hierdurch wird die Belastung für die einzelnen Räder bzw. Laufrollen reduziert.

Die Erfindung ist nachfolgend anhand von Ausführungsbeispielen näher erläutert.

**Figur 1** zeigt in der Oberaufsicht einen Teil eines Lagergebäudes 1 mit zwei erkennbaren Andockstationen 2a und 2b. Solche Lager mit Andockstationen sind bereits seit langem bekannt und sehr vielfältig im Einsatz. Üblicherweise fahren bislang Fahrzeuge, wie z. B. Lastkraftwagen (LKW) 3, rückwärts an die jeweilige Andockstation 2a, 2b und übergeben Waren vom LKW 3 in den Lagerbereich oder nehmen Waren von dort auf.

In Figur 1 ist nun zwischen den Andockstationen 2a, 2b und dem dort gezeigten Lastkraftwagen 3 eine Übergabestation (Querverteiler) 4 des erfindungsgemäßen Logistiksystems dargestellt. Bereits in Figur 1 ist die Übergabestation 4 als Doppelsystem dargestellt, d. h., dass nebeneinander auf der gleichen Übergabestation 4 zwei Plattformen zur Anlage kommen können, z. B. eine erste Plattform, die vom LKW 3 heruntergenommen wird und eine zweite, bereits auf der Übergabestation 4 gelagerte Plattform (z. B. mit Waren), die direkt danach an den LKW 3 wieder übergeben werden kann.

Nach der Übergabe einer Plattform an den LKW 3 kann dann die vom LKW 3 aufgenommene (z. B. leere) Plattform in das Lagergebäude 1 (also durch die Andockstation 2a, 2b) übergeben werden.

Wie in Figur 1 zu erkennen, liegen die Andockstationen 2a und 2b an einer linear ausgerichteten Wand 5. Parallel zu dieser Wand 5 ist ein Schienensystem 6 am Boden vor der Wand 5 ausgerichtet und auf diesem Schienensystem 6 kann die Übergabestation 4 quer zum Gebäude 1, also parallel zur Wand 5 verfahren werden. Die Einzelheiten der Übergabestation 4 sind später erläutert.

**Figur 2** zeigt die Ausführung gemäß Figur 1 in einer perspektivischen Darstellung. Hierbei sind vor allem die bekannten Andockstationen 2a und 2b und die Lage des Schienensystems 6 am Boden vor dem Gebäude 1 deutlicher zu erkennen.

**Figuren 3a, 3b und 3c** zeigen eine erfindungsgemäße Ausbildung des Logistiksystems in der Version eines Einfach-Querverteilers, also einer einfachen Übergabestation 4 aus verschiedenen Perspektiven. Der einzige Unterschied zu der Version gemäß Figuren 1 und 2 besteht darin, dass die Übergabestation 4 immer nur gleichzeitig eine einzige Plattform aufnehmen kann und nicht, wie nach Figur 1, zwei Plattformen.

**Figur 4** zeigt eine Version des Logistiksystems nach Figur 1 oder 3 mit einem vorgesehenen Wetterschutz, so dass auch bei regnerischem Wetter die Übergabestation 4 bzw. die darauf befindliche Plattform oder die darauf befindlichen Güter vor Regen oder sonstigen Wettereinflüssen geschützt sind.

Die **Figuren 5a, 5b und 5c** zeigen verschiedene einzelne Details der Übergabestationen 4 des Logistiksystems.

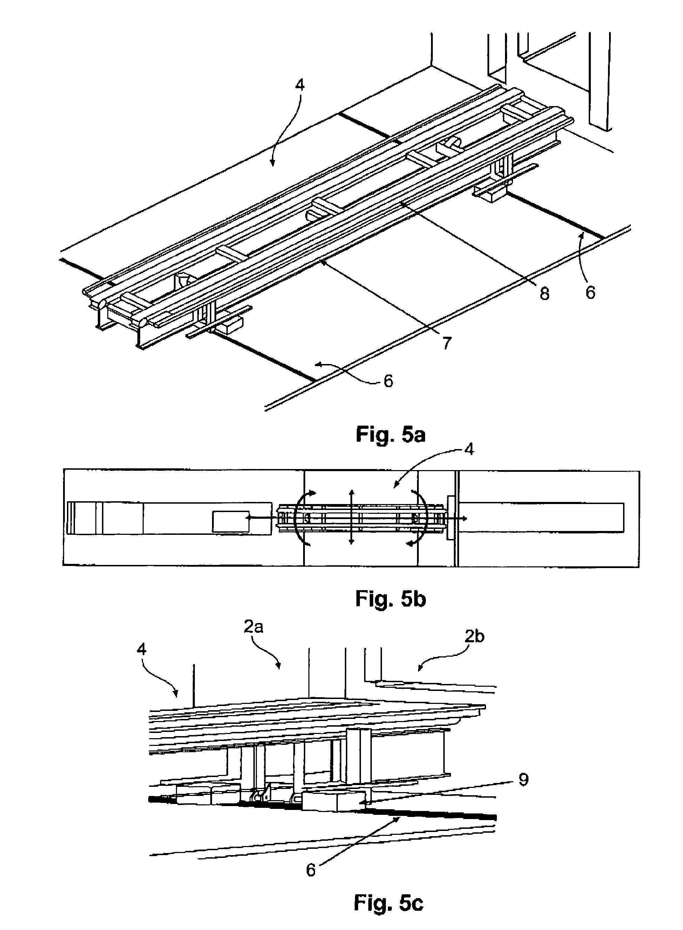

In Figur 5a ist zu erkennen, dass die Übergabestation 4 aus einer Unterkonstruktion (Unterwagen) 7 und einer Oberkonstruktion (Oberwagen) 8 besteht, welche ihrerseits auf einem Fahrwerk 9 ruhen, welches mit den Schienen 6 im Eingriff steht.

Die Übergabestation 4 selbst ist mit Mitteln versehen, sich sowohl an der Höhe als auch der Längsposition als auch der Querposition als auch der Winkligkeit zur Parkposition des Lastkraftwagen 3 oder der jeweiligen Andockstation 2a, 2b auszurichten.

**Figur 6** zeigt nun, wie mittels der erfindungsgemäßen Übergabestation 4 ein Ladungsträger 10 bzw. eine Plattform vom Lager 1 bzw. der Kommissionierungshalle auf die Übergabestation 4 übernommen wird.

Zunächst fährt die Übergabestation 4 vor die entsprechende Andockstation 2 (Hallentor) - siehe Figur 6a. Danach wird das Tor der Andockstation 2 bzw. das Hallentor geöffnet und die Oberkonstruktion 8 der Übergabestation 4 fährt über das Hallenniveau, siehe Figur 6b.

Hiernach greifen bekannte Haken den Ladungsträger 10 (wie diese Haken aussehen, ist in EP-A 1 808 387 offenbart) und ziehen den Ladungsträger 10, also die Plattform ein Stück aus der Halle 1 - siehe Figur 6c. Danach lösen sich die Haken vom Ladungsträger 10, die Oberkonstruktion 8 fährt zurück und hiernach unter den Ladungsträger 10 und fördert ihn dann ganz auf die Übergabestation 4 (Querverteiler) - siehe Figur 6d.

Das Herausziehen des Ladungsträgers 10 (Plattform) von der Ladefläche des LKWs 3 ist mit der bereits in Figur 6 beschriebenen Ausführung quasi identisch.

Wie in Figur 7a zu erkennen, fährt zunächst einmal die Oberkonstruktion 8 so hoch, dass sie oberhalb des Ladungsträgers 10 liegt und, wie in Figur 7 zu erkennen, wird dann der Ladungsträger 10 mittels Haken an der Oberkonstruktion 8 ein Stück weit von der Ladefläche des LKWs 3 gezogen. Hiernach werden die Haken gelöst und die Oberkonstruktion 8 fährt unter den Ladungsträger 10, so dass dieser dann ganz auf die Übergabestation 4 gezogen wird.

Mittels der Seiten-, Höhen- und Winkelausrichtung der Übergabestation 4 wird diese so auf die Parkposition des LKWs 3 ausgerichtet, dass der Ladungsträger 10 nur noch linear auf die Übergabestation 4 bewegt werden muss.

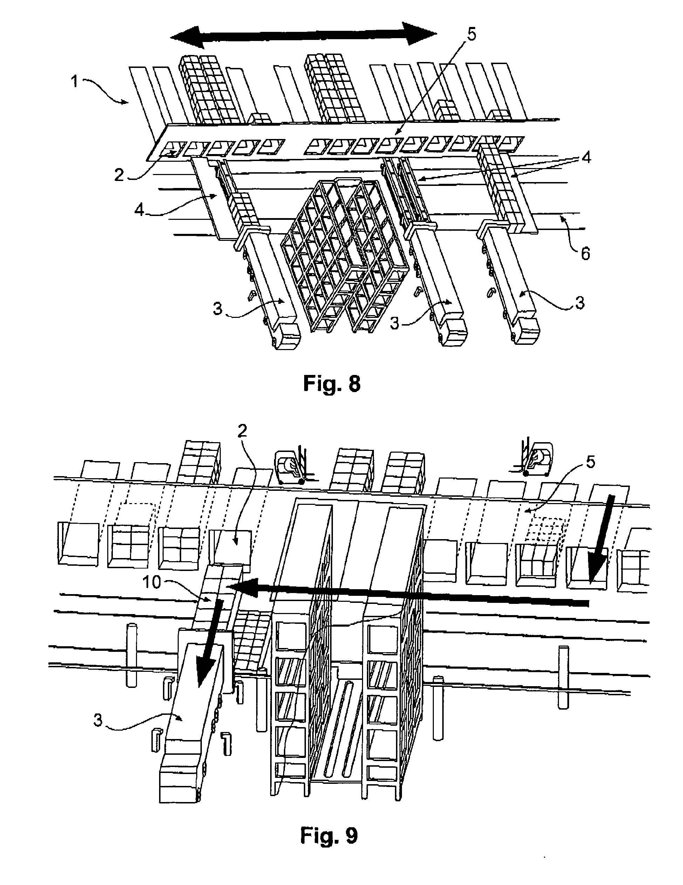

Figur 8 zeigt eine Ausführungsform der Erfindung, bei welcher gut zu erkennen ist, dass auf dem Schienensystem 6 auch mehrere, z. B. drei Übergabestationen 4 parallel zueinander angeordnet werden können und die einzelnen Übergabestationen 4 auch unabhängig voneinander verfahrbar sind, um somit gleichzeitig mehrere Lastkraftwagen 3 bedienen zu können.

In Figur 8 ist besonders gut zu erkennen, dass an der Wand 5 der Gehäusewandung eine Vielzahl von Hallentoren bzw. Andockstationen 2 fluchtend zueinander liegen.

Auch ist in der Figur 8 zu erkennen, dass eine weitere Lagereinheit, bevorzugt als Hochregal-Lagereinheit für Ladungsträger vor dem Gebäude 1 und vor dem Schienensystem 6 ausgebildet werden kann, um somit die Lagerkapazitäten einerseits zu erweitern, ohne gleichzeitig die Zahl der Ladungsträgerübergaben pro gewisser Zeiteinheit zu verringern. Denn durch die erfindungsgemäße Ausbildung der Übergabestationen 4 kann deutlich schneller als bisher Ware vom Lager zum LKW 3 übergeben werden oder auch Ladungsträger vom LKW 3 zum Lager 1 übergeben werden, weil bisher die LKWs 3 relativ präzise an die Hallentore 2 (Andockstationen) rückwärts heranfahren mussten, um optimal mit den Hallentoröffnungen in Übereinstimmung zu kommen. Durch die Querverfahrbarkeit der Übergabestationen 4 ist diese hohe Präzision nicht mehr notwendig und es ist auch nicht einmal notwendig, dass der heranfahrende LKW 3 in völliger Rechtwinkligkeit zur Hallenwand 5 verfahren wird, sondern kleinere Abweichungen hiervon sind verträglich, weil - wie bereits erwähnt - die Übergabestation 4 auch hinsichtlich ihrer Mittenachse verschwenkbar ist, um somit kleine Winkelverstellungen des LKW 3 leicht und zügig ausgleichen zu können.

Vor allem ist es durch die Erfindung nicht mehr relevant, wenn ein LKW 3 sich einmal vor einem "falschen" Hallentor 2 positioniert haben sollte und statt dessen sich hätte vor dem "Nachbarhallentor" positionieren sollen. Bislang war hierzu ein relativ aufwändiges Umrangieren notwendig, durch die Erfindung kann der LKW 3 dort verbleiben, wo er ist; es muss lediglich die Übergabestation 4 um den Abstand eines Hallentores 2 weiterverfahren werden, um den LKW 3 zu ent- oder auch zu beladen.

Auch hierdurch wird die gesamte Logistik der End- und Beladung der LKWs 3 erleichtert.

**Figur 9** zeigt die erfindungsgemäße Ausbildung aus einer anderen Perspektive. Hier ist insbesondere zu erkennen, dass der LKW 3 mit einem beladenen Ladungsträger 10 beladen wird, wobei dieser Ladungsträger 10 nicht etwa aus dem Hallentor 2 (Andockstation) hinter dem LKW 3 stammt, sondern aus einem ganz anderen Hallentor 2 (siehe Pfeile) und durch die Übergabestation 4 sehr zügig quer zur Wand 5 des Kommissionierungsbereichs verfahrbar und exakt auf die Ladefläche des LKWs 3 ausrichtbar ist.

Es versteht sich von selbst, dass die Mittel zum Anheben oder zum Absenken sowohl der Oberkonstruktionen 8 bzw. der Ladefläche des Ladungsträgers 10 auf der Übergabestation 4 als auch die Mittel zur winkligen Ausrichtung der Übergabestation 10, oder auch die Mittel zum Verfahren der Übergabestation 4 auf dem Schienensystem 6 solche sind, die sich für den Einsatzzweck eignen.

Wenn die gesamte Übergabestation 4 mit einer Umhausung versehen ist, so ist stets auch ein ausreichender Wetterschutz gewährleistet.

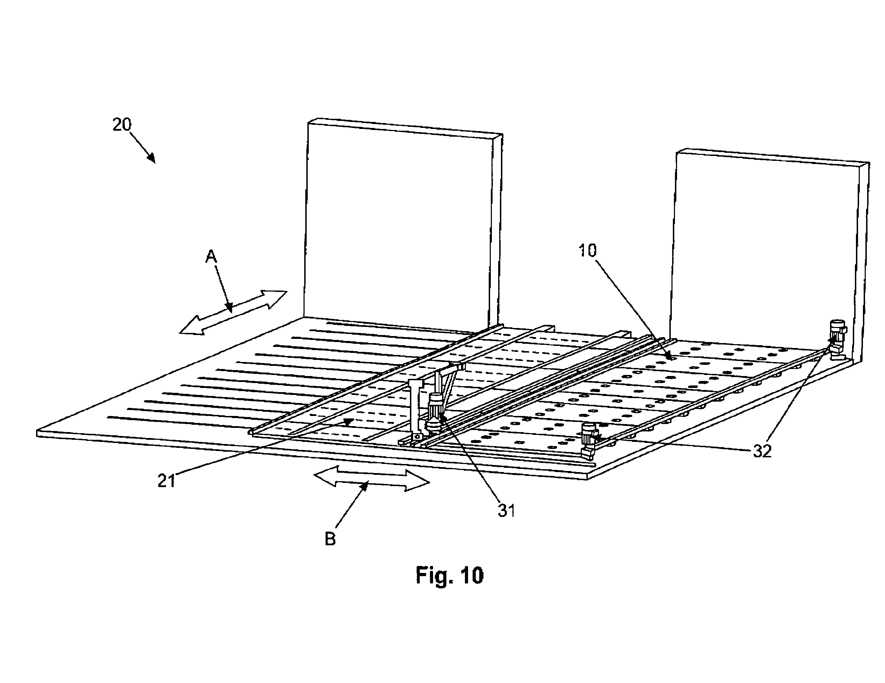

**Figur 10** zeigt eine schematische Prinzipskizze eines Logistiksystems mit einer Übergabestation 20 gemäß einem zweiten Ausführungsbeispiel der vorliegenden Erfindung. Die Übergabestation 20 des zweiten Ausführungsbeispiels weist eine Aufnahme 21 auf, die zwei Plattformen 10 parallel zueinander in Längsrichtung A aufnehmen kann. Die Aufnahme 21 kann in der Richtung B quer zur Längsrichtung A verfahren.

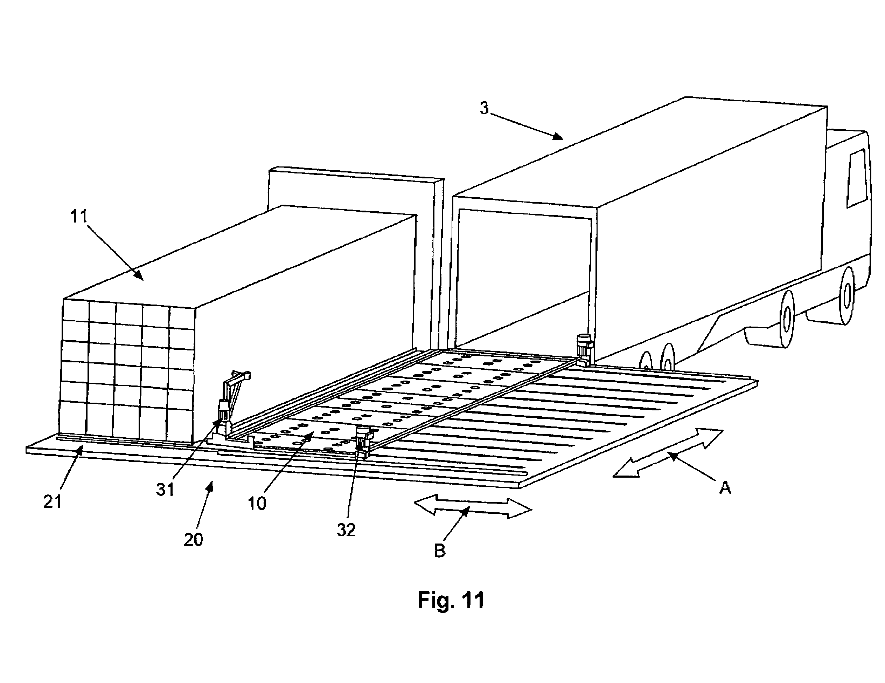

Die Aufnahme 21 besitzt eine Längsvorschubeinheit 31 und eine Quervorschubeinheit 32, die aus zwei einzelnen Antrieben besteht, die in deren Längsrichtung A an gegenüberliegenden Seiten der Aufnahme 21 angeordnet sind. Mittels dieser Vorschubeinheit 31 kann die Aufnahme 21 in Längsrichtung A, d.h. in Richtung zu bzw. von einem zu ent- bzw. beladenden LKW 3 (siehe Figur 11) weg, bewegt werden. Mittels der Quervorschubeinheit 32 kann die Aufnahme 21 in Querrichtung B, d.h. quer zur Längsrichtung A, bewegt werden. Auf diese Weise kann eine Plattform 10 (beladen mit Fracht 11 oder unbeladen) in der Längsrichtung A von einem LKW 3 auf der Aufnahme 21 aufgenommen oder von der Aufnahme 21 an einen LKW 3 abgegeben werden. Ferner kann die Aufnahme 21 mit bis zu zwei aufgenommenen Plattformen 10 (jeweils beladen oder unbeladen) in der Querrichtung B verfahren werden.

Hierdurch ist es auf einfache Art und Weise ohne große Kosten und bauliche Veränderungen möglich, eine Plattform 10 oder zwei Plattformen 10 (jeweils beladen oder unbeladen) von einem LKW 3 aufzunehmen und/oder eine Plattform 10 oder zwei Plattformen 10 (jeweils beladen oder unbeladen) an einen LKW 3 abzugeben. Jede abzugebende Plattform 10 kann unabhängig von der Ankunft des LKW 3 mit der Fracht 11 beladen und jede erhaltene Plattform 10 nach Abfahrt des LKW 3 entladen werden.

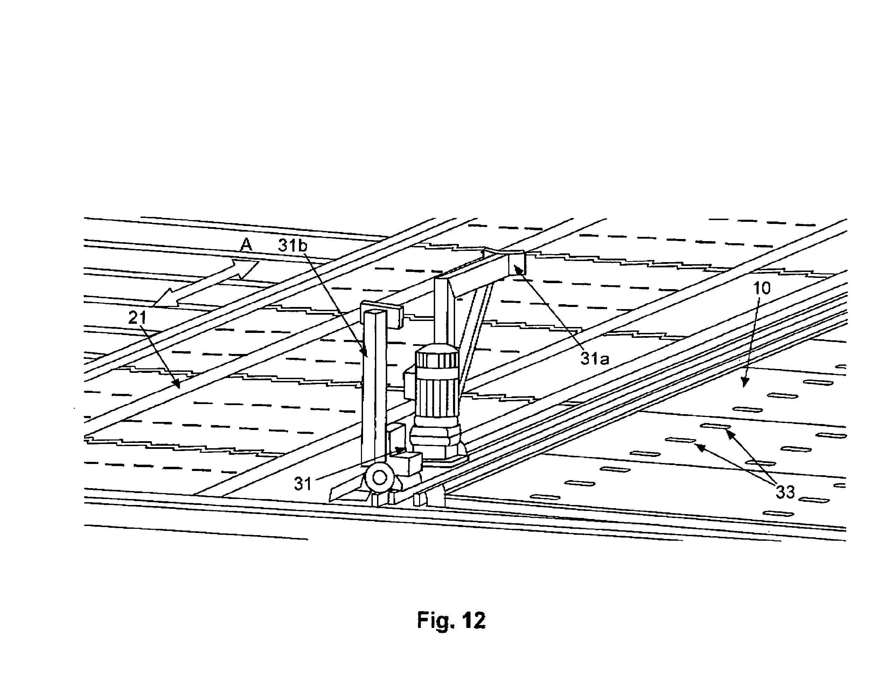

**Figur 12** zeigt eine detailierte schematische Prinzipskizze der Aufnahme 21 mit Längsvorschubeinheit 31 und Plattform 10 gemäß dem zweiten Ausführungsbeispiel der vorliegenden Erfindung. Dabei weist die Längsvorschubeinheit 31 einen ersten Mitnahmebügel 31 a und einen zweiten Mitnahmebügel 31b auf. Beide Mitnahmebügel 31 a, 31b sind um die Achse der Längsbewegung A der Längsvorschubeinheit 31 beweglich angeordnet, um von einer horizontalen Lage über die vertikale aufrechte Lage, wie in Figur 12 gezeigt, in die gegenüberliegende horizontale Lage geklappt zu werden. In der aufrechten vertikalen Lage kann die Längsvorschubeinheit 31 mit den beiden Mitnahmebügeln 31a, 31b entlang der Längskante der Aufnahme 21 so verfahren werden, dass die Längsvorschubeinheit 31 neben der Fracht 11 einer beladenen Plattform 10 entlang verfährt.

In beiden horizontalen Lagen greift der jeweilige Mitnahmebügel 31 a, 31 b in eine Aussparung 33 der Plattform 10 ein und stellt so eine mechanische Kopplung von Längsvorschubeinheit 31 und Plattform 10 her. Dabei können beide Mitnahmebügel 31 a, 31 b zur rechten und zur linken Seite geklappt werden. Wird nun die Längsvorschubeinheit 31 in Längsrichtung A bewegt, so wird auch die Plattform 10 in Längsrichtung A bewegt und hierdurch entweder aus dem LKW 3 herausgezogen oder in den LKW 3 hinein bewegt.

Dabei ist der erste Mitnahmebügel 31a in Längsrichtung A länger ausgeführt als der zweite Mitnahmebügel 31 b, und zwar so lang, dass der erste Mitnahmebügel 31 a in den Laderaum eines LKWs 3 hineinragt und dort in eine Aussparung 33 der Plattform 10 eingreifen kann. So kann die Plattform 10 mittels des ersten Mitnahmebügels 31a auf dem Laderaum des LKWs 3 herausgezogen bzw. in diesen hineingeschoben werden, ohne dass weitere Hilfsmittel oder Vorschubeinheiten benötigt werden. Der kürzere zweite Mitnahmebügel 31 b wird dahingegen dazu verwendet, die Plattform 10 vollständig bis zur dem LKW 3 gegenüberliegenden Seite der Aufnahme 21 zu bewegen bzw. von dieser Seite weg zu bewegen. Durch seine kurze Bauweise ragt der zweite Mitnahmebügel 31 b nicht wesentlich über die Abmaße der Aufnahme 21 hinaus, so dass die Übergabestation 20 nicht mehr Platz als unbedingt nötig in dem Lagergebäude einnimmt.

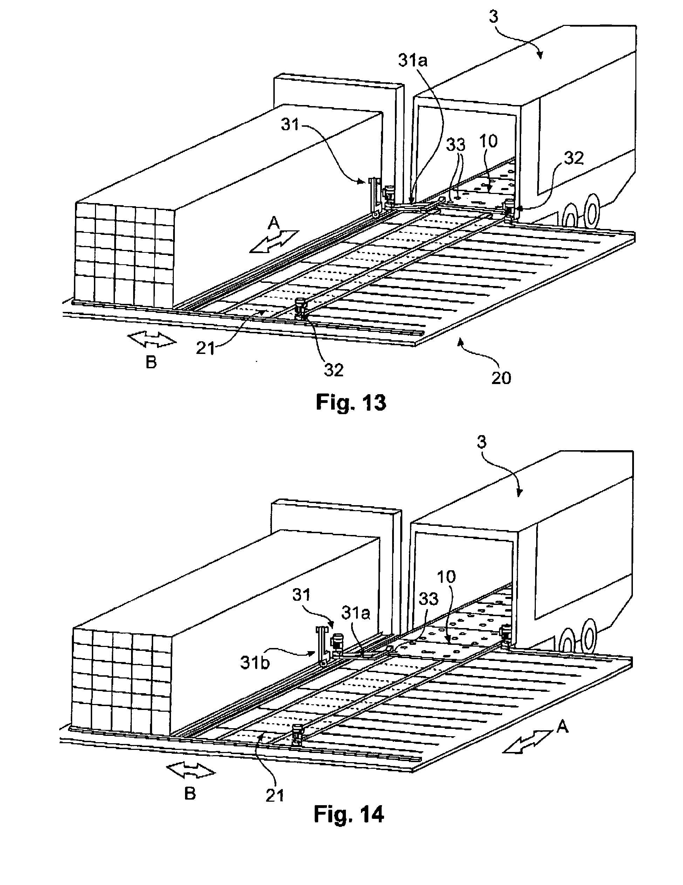

Der Ent- und Beladevorgang mittels des zweiten Ausführungsbeispiels des erfindungsgemäßen Logistiksystem soll im Folgenden beispielhaft anhand der Figuren 13 bis 21 erläutert werden. Dabei sind die folgenden Erläuterungen, die sich auf das Entladen einer unbeladenen Plattform 10 und das anschließende Beladen einer mit Fracht 11 beladenen Plattform 10 beziehen, ebenso auf andere Ent- und Beladevorgänge anzuwenden.

**Figur 13** zeigt eine schematische Prinzipskizze eines Logistiksystems mit einer Übergabestation 20 gemäß dem zweiten Ausführungsbeispiel der vorliegenden Erfindung in einem ersten Schritts eines Ent-/Beladevorgangs. Der LKW 3 ist an eine Andockstation eines Lagergebäudes so herangefahren, dass der LKW 3 direkt vor der Andockstation steht, der Boden des Lagergebäudes und die Ladefläche des LKWs 3 eine horizontale Ebene bilden und die Ladefläche des LKWs 3 zur Aufnahme 21 der Überstation 20 aufgerichtet ist. Auf der Ladefläche des LKWs 3 ist eine unbeladene Plattform 10 vorhanden, die vom LKW 3 zu entladen ist. Entsprechend weist die Aufnahme 21 eine leere Aufnahme 21, in diesem Beispiel die rechte Aufnahme 21, auf, in die die Plattform 10 von LKW 3 aufzunehmen ist.

Zum Entladen einer Plattform 10 von der Ladefläche eines LKWs 3 wird die Aufnahme 21 mittels der Quervorschubeinheit 32 so in der Übergabestation 20 seitlich, d.h. in der Querrichtung B, verfahren, dass die leere Aufnahme 21 vor der Andockstation positioniert wird. Dann verfährt die Längsvorschubeinheit 31 entlang der leeren Aufnahme 21 in Längsrichtung A bis zur Andockstation, so dass der erste, längere Mitnahmebügel 31 a in eine Aussparung 33 der im Laderaum des LKWs 3 befindlichen leeren Plattform 10 eingreifen kann. Die Figur 13 zeigt eine solche Situation mit seitlich horizontal heruntergeklappten ersten, längeren Mitnahmebügels 31 a im Eingriff in eine Aussparung 33 der leeren Plattform 10 innerhalb des Laderaums des LKWs 3.

**Figur 14** zeigt eine schematische Prinzipskizze eines Logistiksystems in einem zweiten Schritts eines Ent-/Beladevorgangs. Die Längsvorschubeinheit 31 bewegt sich auf der Aufnahme 21 in Längsrichtung A von der Andockstation weg und zieht damit mittels des ersten, längeren Mitnahmebügels 31a die leere Plattform 10 von der Ladefläche des LKWs 3 herunter. Dabei zieht die Längsvorschubeinheit 31 die leere Plattform 10 nicht vollständig bis zur der Andockstation gegenüberliegenden Seite der Aufnahme 21, sondern lediglich bis zu einer Position, die zwischen den beiden gegenüberliegenden Seiten der Aufnahme 21 liegt, allerdings so weit aus dem Laderaum des LKWs 3 heraus, dass auch der zweite, kürzere Mitnahmebügel 31 b in eine der Aussparungen 33 der leeren Plattform 10 eingreifen kann. Hierzu kann es notwendig sein, dass die Längsvorschubeinheit 31 in Längsrichtung A in Richtung der Andockstation zurückverfährt, damit der zweite, kürzere Mitnahmebügel 31 b in dieselbe Aussparung 33 der leeren Plattform 10 eingreifen kann, in der sich zuvor der erste, längere Mitnahmebügel 31a im Eingriff befunden hat.

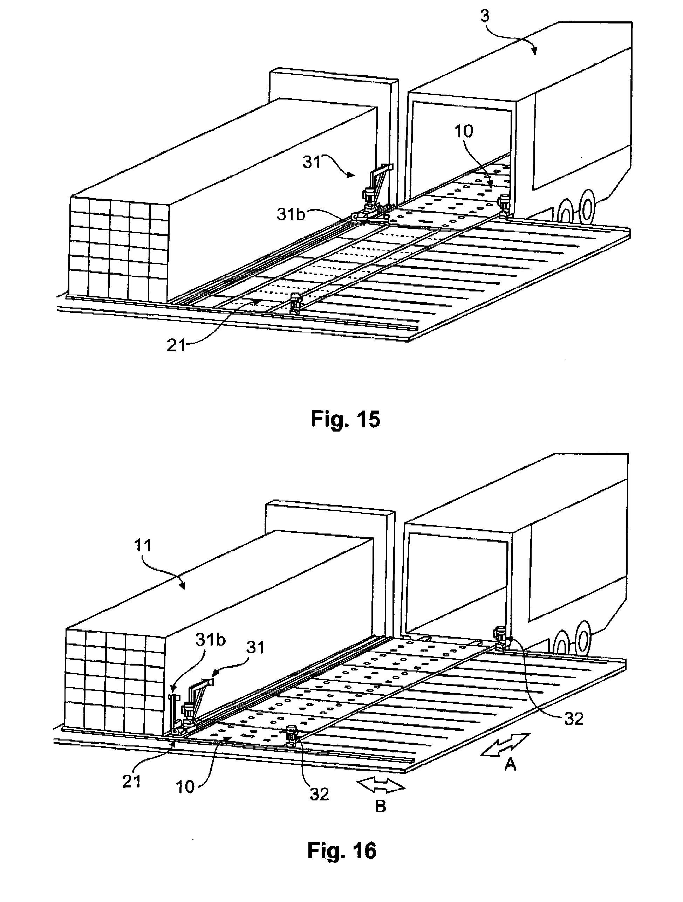

Entsprechend zeigt **Figur 15** zeigt eine schematische Prinzipskizze eines Logistiksystems in einem dritten Schritts eines Ent-/Beladevorgangs, bei dem sich nun der zweite, kürzere Mitnahmebügel 31b im Eingriff mit der leeren Plattform 10 befindet. Mittels des zweiten, kürzeren Mitnahmebügels 31 b zieht die Längsvorschubeinheit 31 die leere Plattform 10 vollständig von der Ladefläche des LKWs 3 herunter. Ist die der Andockstation gegenüberliegende Seite der Aufnahme 21 erreicht und damit die leere Plattform 10 vollständig von der Ladefläche des LKW 3 heruntergezogen, wird der zweite, kürzere Mitnahmebügel 31 b aus der Aussparung 33 herausgelöst, d.h. der zweite, kürzere Mitnahmebügel 31 b wird aus der horizontalen Lade in die vertikale aufrechte Lade zurückgeklappt. Diese Situation ist in **Figur 16** als ein vierter Schritt eines Ent-/Beladevorgangs gezeigt.

Nun wird die Aufnahme 21 mittels der Quervorschubeinheit 32 in der Querrichtung B verfahren, so dass die linke Aufnahme 21, die die zu ladende, mit Fracht 11 bestückte Plattform 10 enthält, vor die Andockstation verfahren wird. Dann wird der zweite, kürzere Mitnahmebügel 31 b auf der aufrechten, vertikalen Lage in die horizontale Lage heruntergeklappt, sodass der zweite, kürzere Mitnahmebügel 31b in eine Aussparung 33 der beladenen Plattform 10 eingreift. Diese Situation ist in **Figur 17** als ein fünfter Schritt eines Ent-/Beladevorgangs gezeigt.

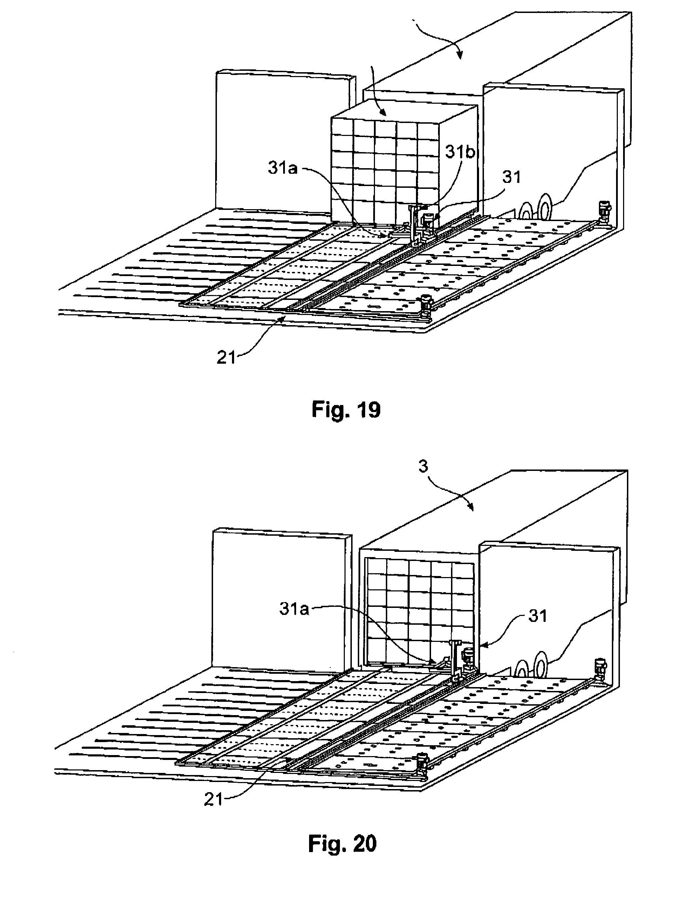

**Figur 18** zeigt eine schematische Prinzipskizze eines sechsten Schritts eines Ent-/Beladevorgangs, bei dem die mit Fracht 11 beladene Plattform 10 mittels des zweiten, kürzeren Mitnahmebügels 31b durch die Längsvorschubeinheit 31 in Längsrichtung A von der linken Aufnahme 21 auf die Ladefläche des LKWs 3 bewegt wird. Dabei bewegt der zweite, kürzere Mitnahmebügel 31 b die beladene Plattform 10 nicht vollständig auf die Ladefläche des LKWs 3, sondern lediglich bis zu einer Position vor Erreichen der Andockstation. An dieser Position wird der zweite, kürzere Mitnahmebügel 31 b von der horizontalen Lage in die vertikale, aufrechte Lage aus dem Eingriff in eine Aussparung 33 der beladenen Plattform 10 geklappt. Nun verfährt, falls erforderlich, die Längsvorschubeinheit 31 in Längsrichtung A in entgegengesetzte Richtung der Andockstation bis zu einer Position, dass der erste, längere Mitnahmebügel 31 a in dieselbe Aussparung 33 der beladenen Plattform 10 eingreifen kann, in die zuvor der zweite, kürzere Mitnahmebügel 31b eingegriffen hat. Diese Eingriffssituation ist als eine schematische Prinzipskizze eines siebten Schritts eines Ent-/Beladevorgangs in **Figur 19** gezeigt.

Die Längsvorschubeinheit 31 verfährt nun mittels des ersten, längeren Mitnahmebügels 31a die beladene Plattform 10 vollständig in den leeren Laderaum des LKWs 3 hinein. Eine entsprechende schematische Prinzipskizze zeigt **Figur 20** als einen achten Schritt eines Ent-/Beladevorgangs.

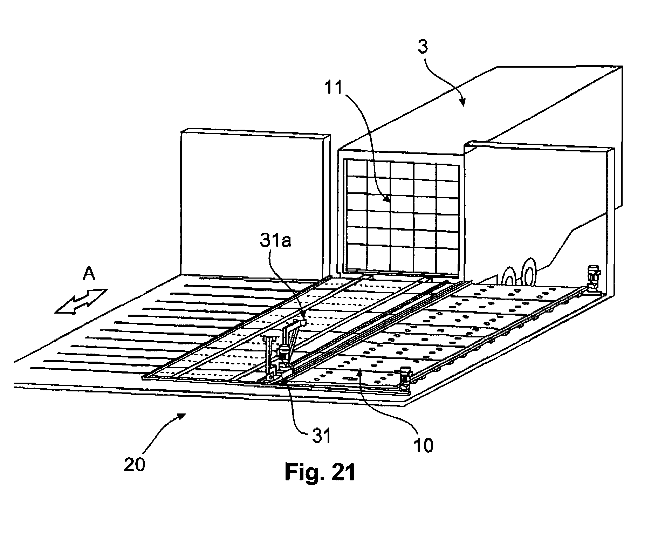

Schließlich löst sich der erste, längere Mitnahmebügel 31a aus dem Eingriff mit der Aussparung 33 der beladenen Plattform 10, indem der erste, längere Mitnahmebügel 31a von der horizontalen Lage in die aufrechte, vertikale Lage geklappt wird. Dann verfährt die Längsvorschubeinheit 31 soweit in Längsrichtung A von der Andockstation weg, dass mindestens der erste, längere Mitnahmebügel 31a nicht mehr in den Laderaum des LKWs 3 hineinragt, damit der Laderaum des LKWs 3 gegebenenfalls geschlossen werden kann. Auch kann die Längsvorschubeinheit 10 so weit von der Andockstation wegverfahren werden, dass jegliche Tätigkeiten am beladenen LKW 3 und im Bereich der Andockstation nicht durch die Längsvorschubeinheit 31 behindert werden. Entsprechend zeigt **Figur 21** eine schematische Prinzipskizze eines Logistiksystems mit einer Übergabestation gemäß dem zweiten Ausführungsbeispiel der vorliegenden Erfindung in einem neunten Schritts eines Ent-/Beladevorgangs, bei dem die Längsvorschubeinheit 31 bis zur der Andockstation gegenüberliegenden Seite verfahren ist.

Mit diesem neunten Schritt eines Ent-/Beladevorgangs ist ein LKW 3 vollständig entladen und beladen worden, wobei die zu entladenden leere Plattform 10 in einem Arbeitsschritt vom LKW 3 aufgenommen und die zu ladende, mit der Fracht 11 beladende Plattform 10 in einem zweiten Arbeitsschritt auf den LKW 3 geladen wurde. Dabei konnte die zu ladende Fracht 11 vor der Ankunft des LKW 3 bereits auf die Plattform 10 geladen werden, ohne das hierfür die Anwesenheit des LKWs 3 an der Andockstation erforderlich war. Somit kann einerseits die Andockstation während des Beladens der Plattform 10 anderweitig, z.B. für das Be- und Entladen eines anderen LKW 3 mittels weiterer Transportmittel, benutzt werden als auch steht der mit der beladenden Plattform 10 zu beladende LKW 3 in dieser Zeit für andere Transporte und Aufgaben zur Verfügung. Hierdurch kann wesentlich Zeit und damit Kosten eingespart und eine höhere Flexibilität als bei herkömmlichen Logistiksystemen erreicht werden. Gleichzeitig ist das erfindungsgemäße Logistiksystem des zweiten Ausführungsbeispiels einfach gestaltet.

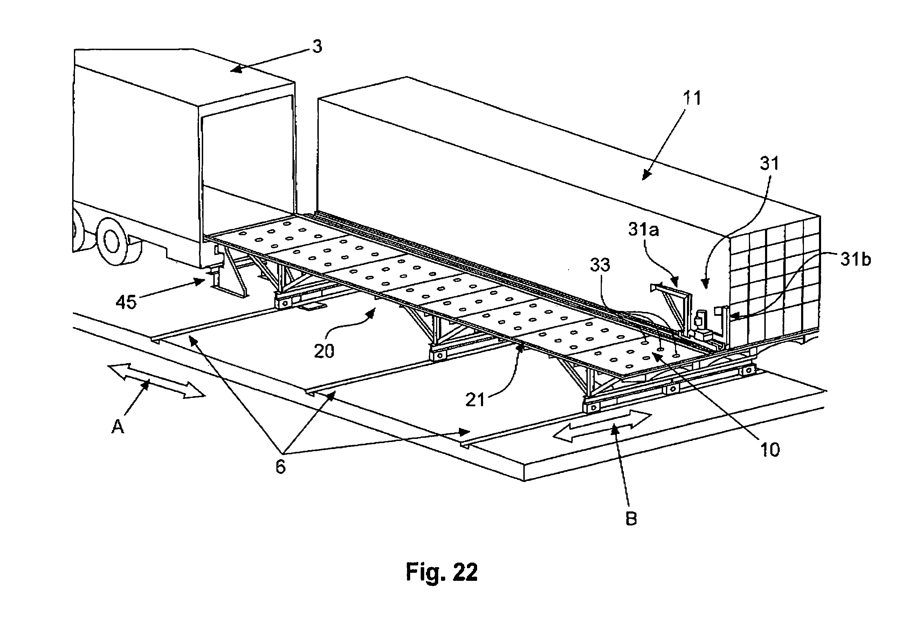

**Figur 22** zeigt eine schematische Prinzipskizze eines Logistiksystems mit einer Übergabestation 20 gemäß einem dritten Ausführungsbeispiel der vorliegenden Erfindung. Die Übergabestation 20 des dritten Ausführungsbeispiels ist für Verlade- und Kommissionierplätze vorgesehen, die ebenerdig zur Ebene der LKW 3 verlaufen, und wird zwischen der LKW 3 und der Andockstation angeordnet. Hierbei ist die Übergabestation 20 als eine Aufnahme 21 ausgebildet, die fest auf einem Schienensystem 6 in Querrichtung B verfahrbar vorgesehen ist. Die Aufnahme 21 ist in dem dritten Ausführungsbeispiel ebenfalls derart ausgestaltet, dass die Aufnahme 21 zwei parallel zueinander in Längsrichtung A angeordneten Plattformen 10 aufnehmen kann. Ferner weist die Aufnahme 21 ebenfalls eine Längsvorschubeinheit 31 mit einem ersten, längeren Mitnahmebügel 31a und einem zweiten, kürzeren Mitnahmebügel 31 b auf, wobei die Längsvorschubeinheit 31 ebenfalls in Längsrichtung A auf der Aufnahme 21 verfahren werden kann.

Allerdings kann bei dem Logistiksystem des dritten Ausführungsbeispiels auf die Quervorschubeinheit 32 des zweiten Ausführungsbeispiels verzichtet werden, da die seitliche Verfahrbewegung in Querrichtung B durch das Schienensystem 6 durchgeführt wird. Hierdurch kann die Quervorschubeinheit 32 eingespart werden. Andererseits bleibt die Funktion des Logistiksystems, eine quer (B) zur Beförderungsrichtung (A) verfahrbare Aufnahme 21 für zwei Plattformen 10 zur Verfügung zu stellen, vollkommen gegeben. Darüber hinaus wird sogar die Flexibilität des erfindungsgemäßen Logistiksystems durch die Ausführung des dritten Beispiels gegenüber dem zweiten Ausführungsbeispiel gesteigert und die Einsatzmöglichkeiten erweitert, da die Übergabestation 20 gemäß dem dritten Ausführungsbeispiel entlang der gesamten Länge des Schienensystems 6 in Querrichtung (B) verfahren kann. Somit kann nicht nur ein LKW 3, der vor einer Andockstation positioniert werden muss, durch die entsprechende Übergabestation 20 ent- und beladen werden, sondern eine auf dem Schienensystem 6 verfahrbare Übergabestation 20 kann mehrere LKW 3 bedienen, die dann in einem entsprechenden Abstand zur jeweiligen Andockstation zu positionieren sind. Auch kann so ein LKW 3 ent- und beladen werden, der an einer anderen Andockstation als der für ihn vorgesehenen positioniert wurde, wodurch ein Umrangieren des falsch positionierten LKWs 3 entfallen kann.

**Figur 22** zeigt einen leeren, zu beladenden LKW 3 und die mittels des Schienensystems 6 verfahrbare Übergabestation 20 mit einer leeren Plattform 10 in der linken Aufnahme 21 und einer mit Fracht 11 beladenen Plattform 10 in der rechten Aufnahme 21. Die Übergabestation 20 ist so positioniert, dass die leere Plattform 10 vor der Ladefläche des LKW 3 positioniert ist, d.h. die Figur 22 zeigt einen Schritt eines Entladevorgangs, bei dem eine leere Plattform 10 von dem LKW 3 vollständig aufgenommen wurde und sich der zweite, kürzere Mitnahmebügel 31 b nicht mehr im Eingriff mit der Aussparung 33 der leeren Plattform 10 befindet.

Ferner zeigt die **Figur 22** eine Rammbock 45, der so unterhalb der Ebene der Aufnahme 21 angeordnet ist, dass der Rammbock 45 einen LKW 3 von der Beschädigung der Übergabestation 20 abhalten kann. Dies bedeutet, dass ein LKW 3, der zu weit in Beförderungsrichtung A auf die Übergabestation 20 zufährt, zuerst und ausschließlich mit dem Rammbock 45 in Kontakt kommt und die Übergabestation 20 nicht berührt. Anders ausgedrückt fixiert der Rammbock 45 den LKW 3 in der Höhe und im Abstand zu der Übergabestation 20.

Der Rammbock 45 ist entsprechend massiv zu gestalten und derart geeignet zu befestigen, dass der Rammbock 45 sicher die kinetische Energie des LKWs 3 aufnehmen kann und seine Position durch den Stoß des LKWs 3 nicht verändert. Ferner ist die Ausgestaltung und Positionierung des Rammbocks 45 derart vorzusehen, dass die Funktionalität der auf dem Schienensystem 6 verfahrbaren Übergabestation 20 nicht beeinträchtigt wird. Dies bedeutet, dass der Rammbock 45 aufgrund seiner Ausmaße und Befestigungsposition weder die Bewegung der Plattform 10 in Beförderungsrichtung A von der Aufnahme 21 zu einem LKW 3 hin oder vom LKW 3 zu der Aufnahme 21 hin noch die Querbewegung B der Übergabestation 20 beeinträchtigen darf.

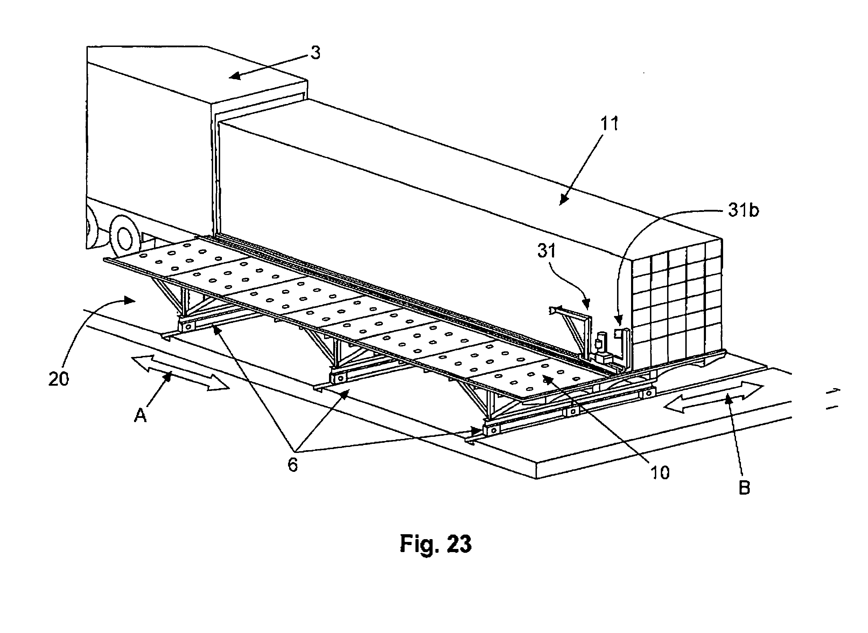

In der schematischen Prinzipskizze der **Figur 23** wurde die gesamte Übergabestation 20 mittels des Schienensystems 6 in der Querrichtung (B) so verfahren, dass nun die rechte Aufnahme 21 mit der mit Fracht 11 beladenen Plattform 10 vor der Ladefläche des leeren LKW 3 positioniert ist. In dieser Position kann nun der zweite, kürzere Mitnahmebügel 31b von der aufrechten, vertikalen Position in die horizontale Position umgeklappt werden, um in die eine Aussparung 33 der beladenen Plattform 10 einzugreifen. Dann kann die beladene Plattform 10 mittels der Längsvorschubeinheit 31 auf die leere Ladefläche des LKW 3 verfahren werden, um so den LKW 3 zu beladen.

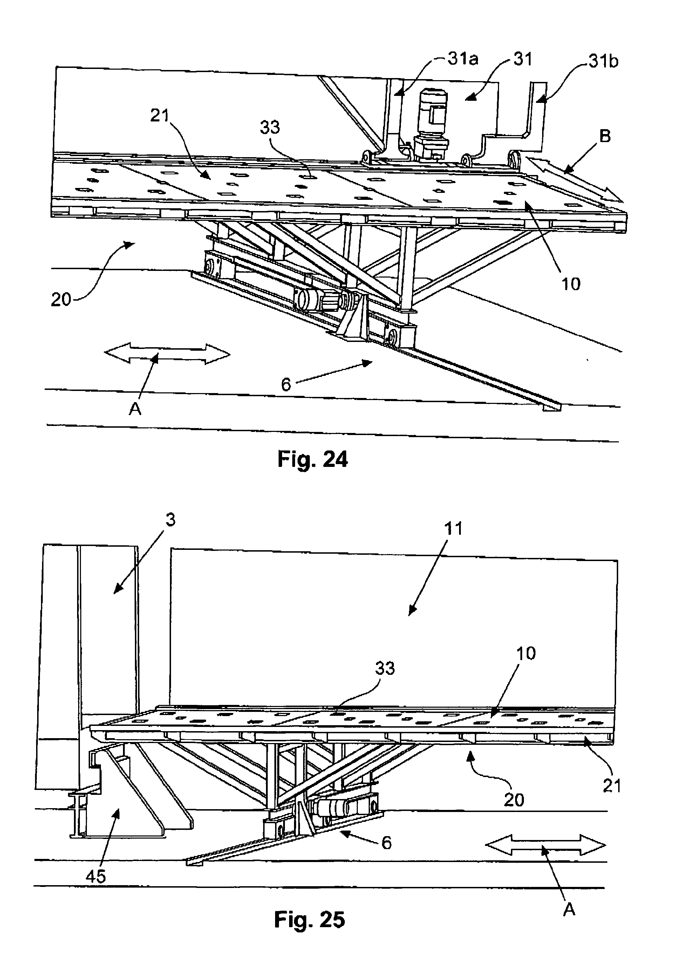

**Figur 24** zeigt eine schematische Detailansicht der hinteren Seite der mittels des Schienensystems 6 verfahrbaren Übergabestation 20 des dritten Ausführungsbeispiels des erfindungsgemäßen Logistiksystems, d.h. der Seite der Übergabestation 20 in Beförderungsrichtung A, die vom LKW 3 weggewand ist. **Figur 25** zeigt eine entsprechende schematische Detailansicht der vorderen Seite der Übergabestation 20, d.h. der dem LKW 3 zugewanden Seite der Übergabestation 20 in Beförderungsrichtung A.

In beiden **Figuren 24 und 25** ist jeweils dargestellt, dass die Übergabestation 20 mittels einer Strebenkonstruktion auf mehreren Rollen gelagert ist, die auf einer Schiene aufliegen. Die Schiene ist dabei so auf dem Boden vorgesehen oder in den Boden eingelassen, dass die Schiene von z.B. einem LKW 3 oder anderen Fahrzeugen und Transportvorrichtungen überfahren werden kann und deren Bewegungsmöglichkeiten nicht einschränkt. Das Schienensystem 6 verfügt über einen Antrieb, um die Übergabestation 20 in Querrichtung B zu verfahren. Hierzu können ein zentraler Antrieb an einer der Strebenkonstruktionen oder auch mehrere Antriebe an mehreren oder allen Strebenkonstruktionen vorgesehen sein.

Alle Vorschubeinheiten des ersten bis dritten Ausführungsbeispiels, d.h. die Längsvorschubeinheit 31, die Quervorschubeinheit 32 und der Vorschub oder die Vorschübe des Schienensystems 6, können einen Getriebemotor aufweisen, der ein Zahnrad aufweist, welches in eine Zahnstange eingreift, um die jeweilige Vorschubbewegung zu erzeugen. Allerdings sind auch alternative Antriebstechniken möglich. Ferner können die Aufnahme 21 auf dem Boden des Lagergebäudes sowie das Schienensystem 6 auf dem Boden der LKW-Ebene mittels Spurkranzrädern auf Kranschienen verfahren. Alternativ ist auch der Einsatz von Rollen oder sonstigen Führungselementen möglich.

Sowohl im zweiten als auch im dritten Ausführungsbeispiel des erfindungsgemäßen Logistiksystems werden der erste, längere Mitnahmebügel 31a und der zweite, kürzere Mitnahmebügel 31 b von einem Bediener, z.B. dem Verlader oder LKW-Fahrer, manuell umgelegt, d.h. von einer Position in eine andere Position geklappt. Es besteht aber auch die Möglichkeit, dieses Umklappen durch einen weiteren Antrieb vorzunehmen, der entsprechend an der Längsvorschubeinheit 31 vorzusehen ist.

Ferner kann das Verfahren der Aufnahme 21 in Querrichtung B mittels der Quervorschubeinheit 32 sowie das Verfahren der Plattform 10 in Beförderungsrichtung A mittels der Längsvorschubeinheit 31 durch ein Bedienen der jeweiligen Vorschubeinheit 31, 32 selbst erfolgen, d.h. an der jeweiligen Vorschubeinheit 31, 32 ist durch einen Bediener manuell die Bewegungsrichtung und gegebenfalls die Bewegungsgeschwindigkeit einzustellen und die Vorschubbewegung zu starten bzw. zu beenden. Dabei kann das Beenden der jeweiligen Vorschubbewegung zusätzlich oder alternativ auch durch die Vorschubeinheit 31, 32 selbst durchgeführt werden, um eine Kollision der Aufnahme 21 bzw. der Plattform 10 mit der Umgebung zu vermeiden. Das Erreichen einer Endposition der Vorschubbewegung kann dabei durch Sensoren wie Tastschalter oder Lichtschranken ermittelt werden. Auf diese Weise kann eine Fehlbedienung der jeweiligen Vorschubeinheit 31, 32 durch den Bediener dahingehend vermieden und die Sicherheit des Logistiksystems für den Bediener und die Umgebung dahingehend gewährleistet werden, dass die Aufnahme 21 bzw. die Plattform 10 nur innerhalb bestimmter Grenzen verfahren können und die Vorschubbewegung auch dann bei Erreichen dieser Grenzen beendet wird, wenn der Bediener die Vorschubbewegung der jeweiligen Vorschubeinheit 31, 32 nicht manuell beendet.

Alternativ kann die Bedienung der Vorschubheiten 31, 32 sowie des Schienensystems 6 auch durch den Bediener durch ein Bediengerät erfolgen, welches z.B. an der Andockstation fest installiert ist oder auch als mobiles Bediengerät vom Bediener mitgeführt werden kann. Hierdurch muss sich der Bediener nicht zu den beiden Vorschubeinheiten 31, 32 bewegen, sondern kann über das Bediengerät die Eingaben tätigen. Dabei kann dieses Bediengerät mit einer Steuerungseinheit der jeweiligen Vorschubeinheit 31, 32, einer zentralen Steuerungseinheit der Übergabestation 20 zur Ansteuerung beider Vorschubeinheiten 31, 32 oder auch einer zentralen Steuerungseinheit des gesamten Logistiksystems verbunden sein oder auch selbst eine Steuereinheit besitzen, an die die Eingaben des Bedieners vom Bediengerät übermittelt werden. Entsprechend kann sowohl ein separates Bediengerät für jede Vorschubeinheit 31, 32, ein gemeinsames Bediengerät für die beiden Vorschubeinheiten 31, 32 einer Übergabestation 20 oder auch ein zentrales Bediengerät für mehrere Übergabestationen 20 bzw. für das gesamte Logistiksystem vorgesehen sein. Die Verbindung zwischen der jeweiligen Steuerungseinheit und dem entsprechenden Bediengerät kann über ein Kabel ebenso erfolgen wie über eine kabellose Übertragung, für die Funk-, Laser- oder Infrarotübertragungstechniken ebenso wie weitere Übertragungstechniken in Frage kommen. Ferner kann die kabelgebundene oder kabellose Übertragung direkt zwischen Bediengerät und Steuerungseinheit erfolgen oder aber auch über ein zentrales Übertragungssystem wie ein Bussystem, welches für eine oder mehrere Übergabestationen 20 oder sogar das gesamte Logistiksystem vorgesehen sein kann.

Die zentrale Steuerungseinheit verarbeitet dann die vom Bediengerät erhaltenen Eingaben des Bedieners und steuert die Vorschubeinheiten 31, 32 entsprechend an. Ferner kann die zentrale Steuerungseinheit Informationen wie z.B. die vorgegebene Bewegungsgeschwindigkeit oder Bewegungsrichtung, die aktuelle Position in der jeweiligen Bewegungsrichtung, den noch verbleibenden Restverfahrweg in der aktuellen Bewegungsrichtung, das Erreichen einer Position, ab der der eine Mitnahmebügel 31a, 31b aus der Aussparung 33 hochgeklappt werden und der andere Mitnahmebügel 31 a, 31 b in die Aussparung 33 eingreifen kann, den Status der Vorschubeinheit 31, 32 (z.B. Vorschubeinheit eingeschaltet, Vorschubeinheit in Bewegung, Vorschubeinheit im Stillstand, Vorschubeinheit blockiert, unzulässige Eingabe/Einstellung, Fehler etc.) oder weitere Informationen von den Vorschubeinheiten 31, 32 erhalten bzw. selbst bestimmen und an das Bediengerät weitergeben. Diese Informationen können dann dem Bediener auf dem Bediengerät angezeigt werden. Auch können diese Informationen in der zentralen Steuerungseinheit selbstständig und automatisiert verarbeitet werden, um z.B., wie bereits weiter oben beschrieben, eine Vorschubbewegung bei Erreichen einer Grenzposition auch ohne Eingabe des Bedieners selbstständig zu beenden. Ferner kann die Steuerungseinheit auch selbstständig die Längsvorschubeinheit 31 in eine Position verfahren, in der z.B. der eine Mitnahmebügel 31 a, 31b aus der Aussparung 33 hochgeklappt werden und der andere Mitnahmebügel 31 a, 31b in die Aussparung 33 eingreifen kann.

Auch können an der Längsvorschubeinheit 31 Sensoren wie Taster, Lichtschranken, Laserabstandsmesser oder mehrdimensionale Laserscanner oder andere Sensoren vorgesehen werden, um die Aussparungen 33 der Plattform 10 selbstständig durch die Steuerungseinheit zu erkennen und die Längsvorschubeinheit 31 selbstständig in eine Position zu verfahren, dass der entsprechende Mitnahmebügel 31 a, 31 b in die erkannte Aussparung 33 eingreifen kann. Sind die Mitnahmebügel 31a, 31b jeweils mit einem Antrieb oder auch mit einem gemeinsamen Antrieb ausgestattet, so kann das Eingreifen und aus dem Eingriff bringen der Mitnahmebügel 31 a, 31b in der entsprechenden Position der Längsvorschubeinheit 31 ebenfalls selbstständig durch die Steuerungseinheit erfolgen. Dabei können generell alle in den Figuren 4 bis 12 beschriebenen Schritte eine Ent- und Beladevorgangs ebenso wie alle sonstigen Be- und Entladevorgänge durch eine entsprechende Steuerungseinheit, der die entsprechenden Informationen zur Verfügung stehen und die die entsprechenden Antriebe ansteuern kann, entweder in Einzelschritten, Teilschritten oder als automatisierter Programmablauf eine Ent- oder Beladevorgangs nach einmaliger Eingabe oder jeweiliger Eingabe für dem entsprechenden Einzel- oder Teilschritt durch den Bediener durchgeführt werden.

In allen Ausführungsbeispielen ist es erforderlich, dass der LKW 3 möglichst nah an den Rammbock und damit auch an die Übergabestation 20 heranfährt, damit der erste, längere Mitnahmebügel 31a in die Aussparung 33 der Plattform 10 eingreifen kann, die sich auf der Ladefläche des LKW 3 befindet. Andersherum bedeutet dies, dass, wenn der Abstand zwischen LKW 3 und der Längsvorschubeinheit 31 der Übergabestation so groß ist, dass der erste, längere Mitnahmebügel 31a nicht in die Aussparung 33 der Plattform 10 auf dem LKW 3 eingreifen kann, die Plattform 10 nicht aus dem LKW 3 zur Aufnahme gezogen werden kann. Ebenso kann auch eine Plattform 10 nicht vollständig auf die Ladefläche eines LKW 3 befördert werden und ragt dann aus dem LKW 3 heraus, was für einen Transport nicht zulässig ist. Daher ist es wichtig, den Abstand zwischen der Rückseite des LKW 3 und der Übergabestation 20 gering zu halten. Hierzu ist es vorteilhaft, wenn bereits während des Heranfahrens rückwärts an die Andockstation bzw. die Übergabestation 20 dem Fahrer der verbleibende Abstand angezeigt wird. Auf diese Weise kann eine bessere Positionierung vorgenommen werden als wenn der Fahrer des LKW 3 lediglich mittels eines Rückspiegels oder einer Rückfahrkamera den verbleibenden Abstand abschätzt.

Ferner kann mittels zwei Abstandssensoren auch die Schiefstellung des LKWs 3 gegenüber der Andockstation bzw. der Übergabestation 20 bestimmt werden. Hierzu werden die beiden Abstände jeweils gemessen und dann die Differenz aus den beiden Abständen bestimmt. Je größer die Differenz ist, umso größer ist die Schiefstellung. Dabei gibt gleichzeitig das Vorzeichen der Differenz die Richtung der Schiefstellung an. Diese Richtung der Schiefstellung kann zur Korrektur der Orientierung des LKWs 3 gegenüber der Andockstation bzw. der Übergabestation 20 dem Fahrer angezeigt werden. Alternativ kann auch die entgegengesetzte Richtung zur Schiefstellung angezeigt werden, d.h. die Richtung, in die die Lenkbewegung zu korrigieren ist, um die Schiefstellung auszugleichen, d.h. zu minimieren. Ebenso kann die Differenz der beiden Abstände dem Fahrer angezeigt werden als Maß dafür, wie sehr die Orientierung des LKWs 3 zu korrigieren ist. Anstelle eines konkreten Zahlenwertes für die Differenz der Abstände kann auch eine relative Information angezeigt werden, die z.B. lediglich die Qualität der Schiefstellung von z.B. gering bis sehr stark anzeigt. Diese Anzeige kann z.B. über die Länge eines Balkens oder dergleichen erfolgen. Auch kann die Anzeige anzeigen, dass aufgrund der aktuellen Schiefstellung des LKWs 3 und dem bestimmten verbleibenden Abstands eine erforderliche Korrektur der Schiefstellung nicht mehr durchführbar ist und daher bereits zu diesem Zeitpunkt das Rückwärtsheranfahren abgebrochen und ein erneuter Rangierversuch unternommen werden sollten. Hierdurch kann beim Rangieren Zeit eingespart werden.

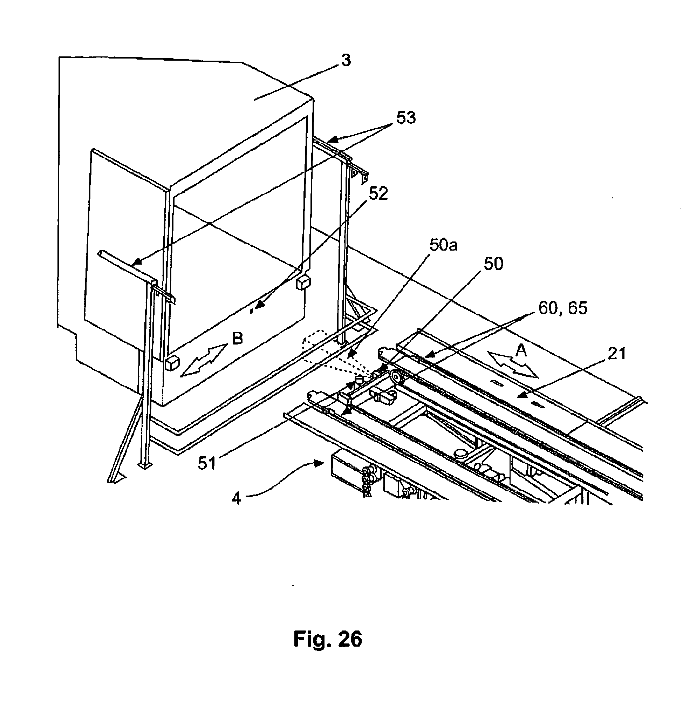

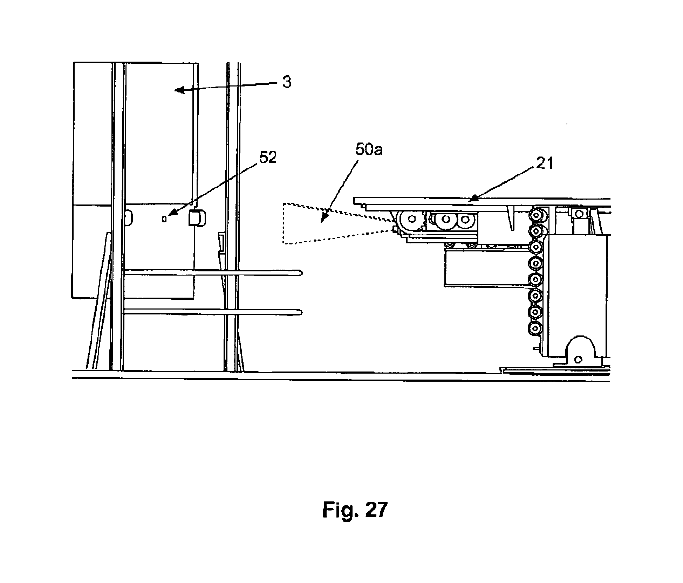

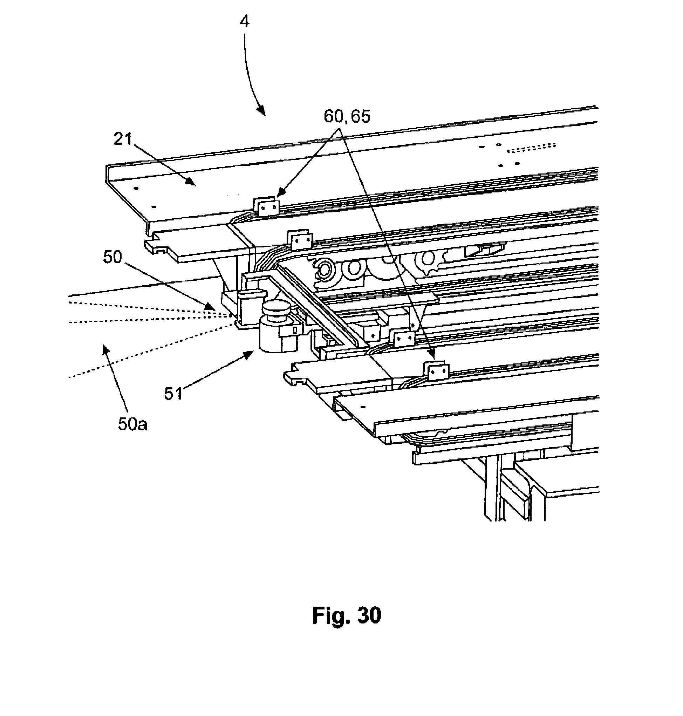

Bei allen Ausführungsbeispielen kann zusätzlich oder alternativ die Positionierung und korrekte Orientierung des LKWs 3 gegenüber der Andockstation bzw. der Übergabestation 20 auch mittels des in den Figuren 26 bis 30 dargestellten Positioniersysteme durchgeführt werden.

Ein Positioniersystem weist einen Positionsfinder 50 auf, der an der Seite der Übergabestation 20 unterhalb der Aufnahme 21 so vorgesehen ist, dass der Positionsfinder 50 in Beförderungsrichtung A zu dem LKW 3 ausgerichtet ist, der zu ent- bzw. beladen ist. Dabei strahlt der Positionsfinder 50 einen Lichtkegel 50a ab, der von einem entsprechenden Reflektor 52 zurückgeworfen und wieder vom Positionsfinder 50 aufgenommen wird. Hierdurch kann der Positionsfinder 50 die Position des Reflektors 52 in der vertikalen Richtung und Querrichtung B zur Beförderungsrichtung A bestimmen.

Der Reflektor 52 ist dabei auf der Rückseite eines LKW 3 derart vorgesehen, dass sich der Reflektor 52 unterhalb der Ladefläche des LKWs 3 an einer bekannten und festgelegten Position befindet. Hierdurch kann durch den Positionsfinder 52, wenn die Position der Ladefläche des LKWs 3 relativ zur Position des Reflektors 52 bekannt ist, die Position der Ladefläche des LKWs 3 bestimmt werden. Zur Umsetzung dieses Positioniersystems ist lediglich ein Reflektor am LKW 3 vorzusehen, wodurch dieses Positioniersystem mit minimalen Veränderungen am LKW auskommt.

Diese Positionsinformation kann z.B. dafür verwendet werden, eine mit entsprechenden Antrieben ausgestattere Übergabestation 20 in vertikaler Richtung und/oder in Querrichtung derart zu verfahren, dass die Übergabestation 20 an der Ladefläche des LKWs 3 ausgerichtet wird. Auf diese Weise muss ein unzureichend positionierter LKW 3 nicht umrangiert werden, um seine Position zu verbessern, sondern die Übergabestation 20 kann der Ladefläche des LKWs 3 nachgeführt werden, was zeitsparender als Umrangieren ist.

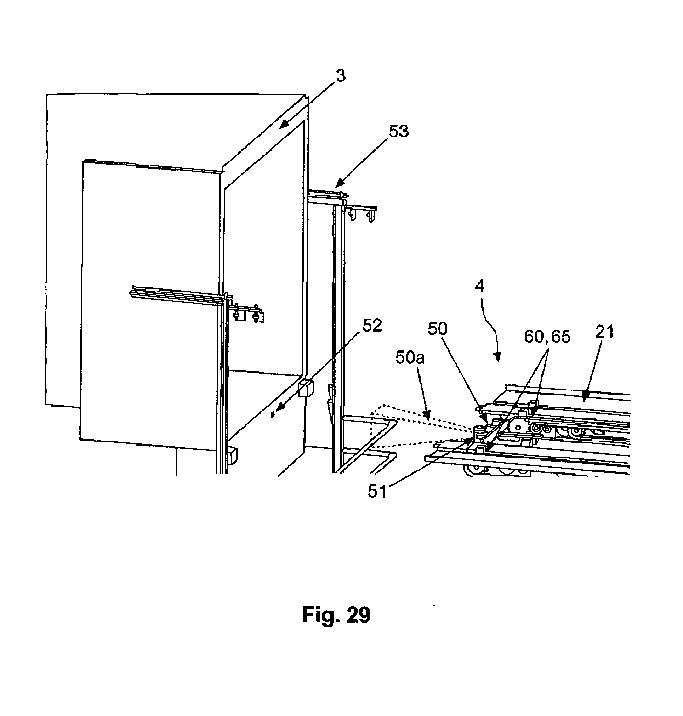

**Figuren 26** **und** **29** zeigen ferner ein Lichtgitter 53, das vor der Übergabestation 20 auf der Seite in Beförderungsrichtung A, an der der LKW 3 zu positionieren ist, derart angeordnet ist, dass der LKW 3 mit seinem Aufbau rückwärts in den Erfassungsbereich des Lichtgitters 53 hineinfahren kann. Das Lichtgitter 53 weist eine Lichtstrahleinteilung auf, mittels der in Schritten bestimmt werden kann, wie weit der Aufbau des LKWs 3 bereits in den Erfassungsbereich des Lichtgitters 53 hinein bewegt wurde. Da das Lichtgitter 53 in einem festen und bekannten Abstand zur Übergabestation 20 vorgesehen ist, ist über die Position des LKWs 3 im Erfassungsbereich des Lichtgitters 53 auf der Abstand des LKWs 3 zur Übergabestation 20 bekannt.

Der mittels Positionsfinder und bzw. oder Lichtgitter bestimmte Abstand kann über z.B. eine farbige Ampel (nicht gezeigt) dem Fahrer angezeigt werden, ob der LKW 3 noch weiter in Beförderungsrichtung A zur Übergabestation 20 zu bewegen ist oder ob der LKW 3 sogar schon zu weit zur Übergabestation 20 bewegt wurde. So kann z.B. ein gelbes Ampelsignal anzeigen, dass sich der LKW 3 bereits mit seinem Aufbau rückwärts in dem Erfassungsbereich des Lichtgitters 53 befindet aber noch weiter rückwärts zu bewegen ist. Ein rotes Ampelsignal könnte z.B. anzeigen, dass die Position erreicht ist, um die Plattform 10 zu übernehmen oder zu übergeben. Und ein rotes blinkendes Ampelsignal könnte z.B. anzeigen, dass der LKW 3 bereits über die Endposition hinausgefahren ist und weiter in Beförderungsrichtung A von der Übergabestation 20 weg zu bewegen ist. Zusätzlich oder alternativ kann auch der Abstand selbst angezeigt werden oder es sind andere Signale möglich, um aufgrund des mittels des Lichtgitters 53 ermittelten Abstandes zur Positionierung des LKWs 3 zu nutzen. Der mittels Lichtgitter 53 bestimmte Abstand kann auch wie der mittels Abstandssensoren bestimmte Abstand dem Fahrer angezeigt werden.

**Figuren 26** **und** **28 bis 30** zeigen einen Laserscanner 51, der ebenso wie der Positionsfinder 50 an der Übergabestation 20 vorzusehen ist. Mittels eines solchen Laserscanners 51, der üblicherweise als mehrdimensionaler Laserscanner 51 ausgeführt ist, kann der Bereich vor der Übergabestation 20 überwacht werden. So können mehrdimensionale Strukturen wie Ladungsreste, leere Ladungsträger, Holzbalken, Verpackungsmaterial oder auch Personen erkannt werden, die sich in diesem Bereich befinden und einen rückwärtsfahrenden LKW 3 behindern oder durch diesen gefährdet werden würden. Durch den mehrdimensionalen Laserscanner 51 können diese Objekte und Personen sicher und zuverlässig automatisch erkannt werden. Die Präsenz von Hindernissen und Personen kann dann durch geeignete Warnmittel dem Fahrer des rückwärtsfahrenden LKWs 3 oder auch weiteren Personen im Bereich der Übergabestation 10 bzw. den gefährdeten Personen selbst angezeigt werden. Hierzu können optische Warnmittel wie blinkende Rundumkennleuchten oder akustische Warnsignalgeber verwendet werden. Auch läßt sich die Präsenz von Hindernissen und Personen mittels der Anzeigemittel der Abstandssensoren, des Positionsfinders 50 und bzw. oder des Lichtgitters 53 kombinieren.

Ferner ist es auch möglich, wie z.B. in **Figur 26** **und** **29** gezeigt, den Positionsfinder 50, das Lichtgitter 52 und den mehrdimensionalen Laserscanner 51 an ein und derselben Übergabestation 20 gemeinsam einzusetzen, um die verschiedenen Überwachungsmöglichkeiten der einzelnen Systeme 50, 51, 52 zu kombinieren und so deren Vorteile in einer gemeinsamen Überwachungsanlage zu nutzen. Diese Überwachungsanlage oder deren einzelne Systeme 50, 51, 52 lassen sich auch in das Logistiksystem einbinden, um die deren Informationen im Rahmen des gesamten Logistiksystems für Überwachungsaufgaben wie die Statusbestimmung einzelner Übergabestationen 20 zu ermitteln.

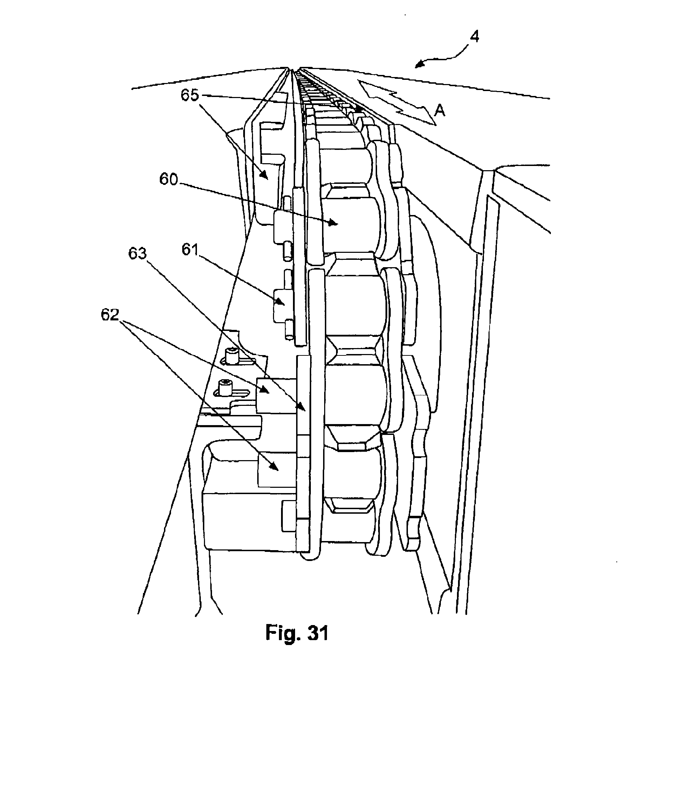

**Figur 31** zeigt eine Abbildung einer Kette 60, wie sie alternativ zur Längsvorschubeinheit 31 an der Übergabestation 20 verwendet werden kann, um die Plattform 10 in Beförderungsrichtung A zu bewegen. Dabei weist die Kette 60 zahlreiche Kettenelemente auf, in die ein Zahnrad eingreift, um die Kette 60 zu bewegen. Die einzelnen Kettenelemente weisen Kettenbolzen 61 auf, die mittels Mitnehmerlaschen 63 miteinander verbunden sind. Einige Kettenbolzen 61 sind als verlängerte Kettenbolzen 62 ausgeführt, um in die Plattform 10 einzugreifen und diese so mit zubewegen.

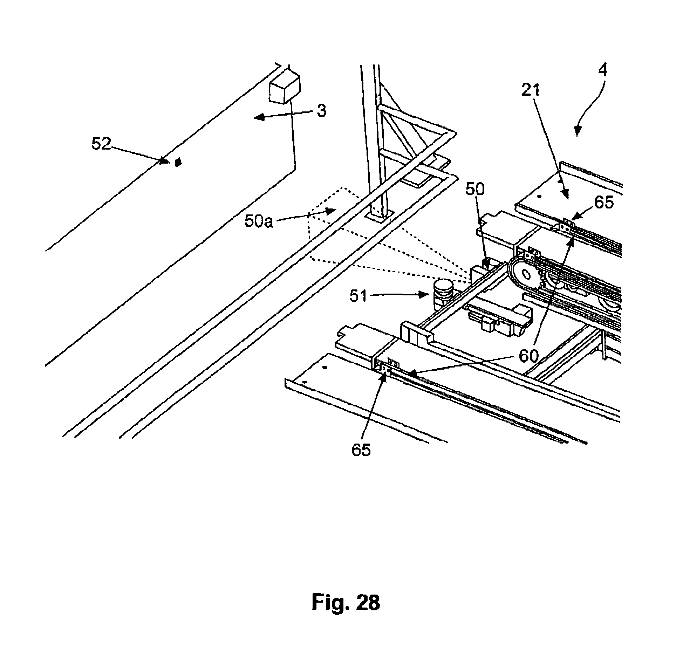

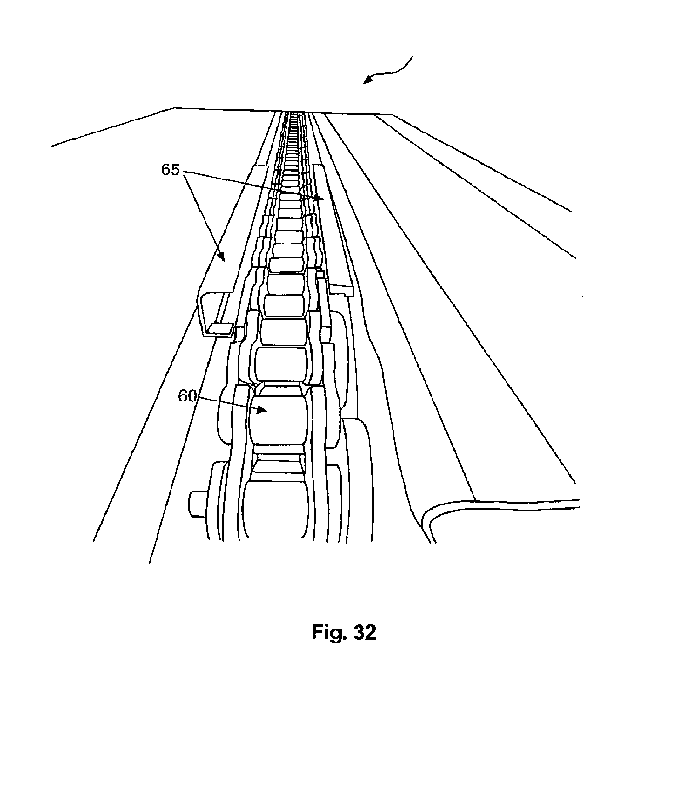

**Figuren 31** **und** **32** zeigen ferner zwei seitliche Kettenführungen 65, die in den Zwischenraum der Übergabestation 20, in dem sich die Kette 60 in Beförderungsrichtung A bewegt, eingelassen sind, siehe auch **Figuren 26** **und** **28** bis **10**. Diese Kettenführung 65 verengen an diesen Stellen den Zwischenraum derart, die Mitnehmerlaschen 63 seitlich gestützt werden und, gerade bei Belastung der Kette durch das Mitbewegen der Plattform 10, nicht abkippen oder sogar von dem Zahnrad springen können. Dabei sind die seitlichen Kettenführungen 65 so ausgebildet, dass die verlängerten Kettenbolzen 62 durch die seitlichen Kettenführungen 65 hindurch laufen können, siehe **Figur 31****.**

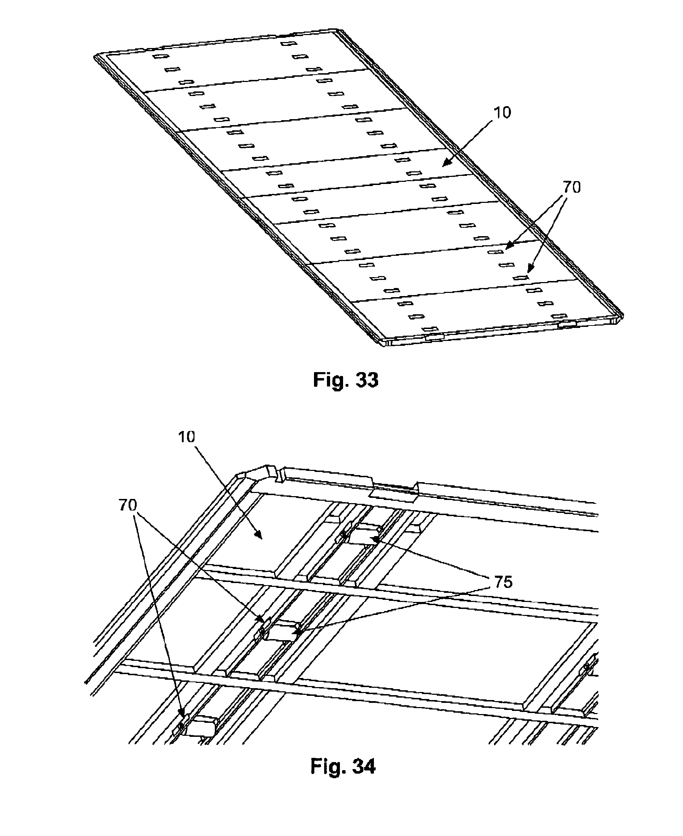

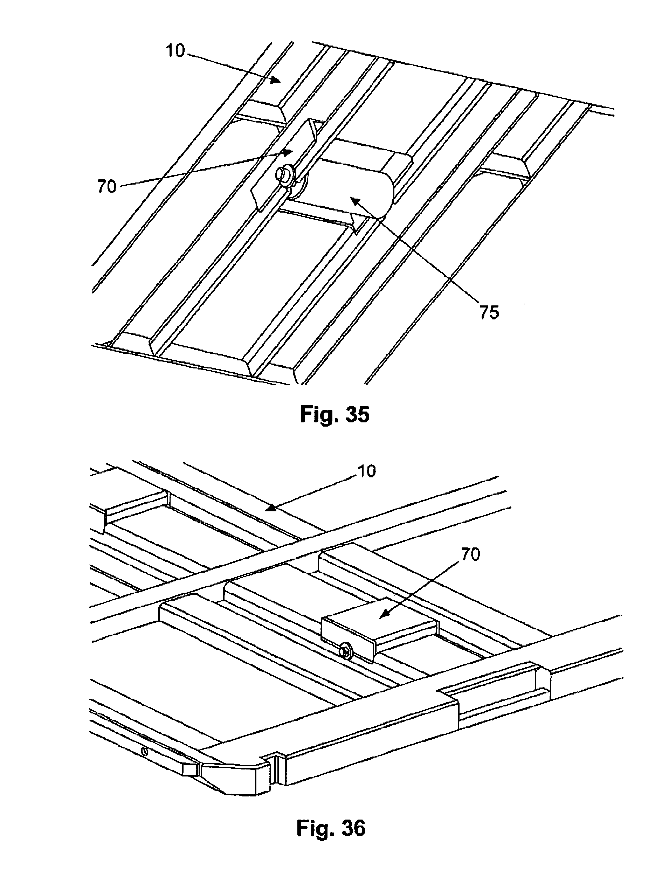

**Figuren 33 bis 36** zeigen eine Plattform 10 in einer sehr flachen Ausführungsform, wie sie bei dem erfindungsgemäßen Logistiksystem vorteilhaft verwendet werden kann. Dabei zeigt Figur 33 eine Draufsicht auf die Oberseite der Plattform 10 und die **Figur 34** eine Ansicht der Unterseite der Plattform 10 mit Rädern 75 und Radkästen 75. Die Räder 75 sind in den Radkästen 70 drehbar gelagert. Die Radkästen 70 sind derart in die Plattform 70 eingelassen, dass die Räder 75 nur geringfügig über die Unterseite der Plattform 10 hinausragen. Hierdurch entspricht die Gesamthöhe der Plattform 10 mit Rädern 75 und eingelassenen Radkästen 70 ungefähr dem Durchmesser der Räder 75. Diese Gesamthöhe kann in einer beispielhaften Ausführungsform höchstens 60 mm betragen.

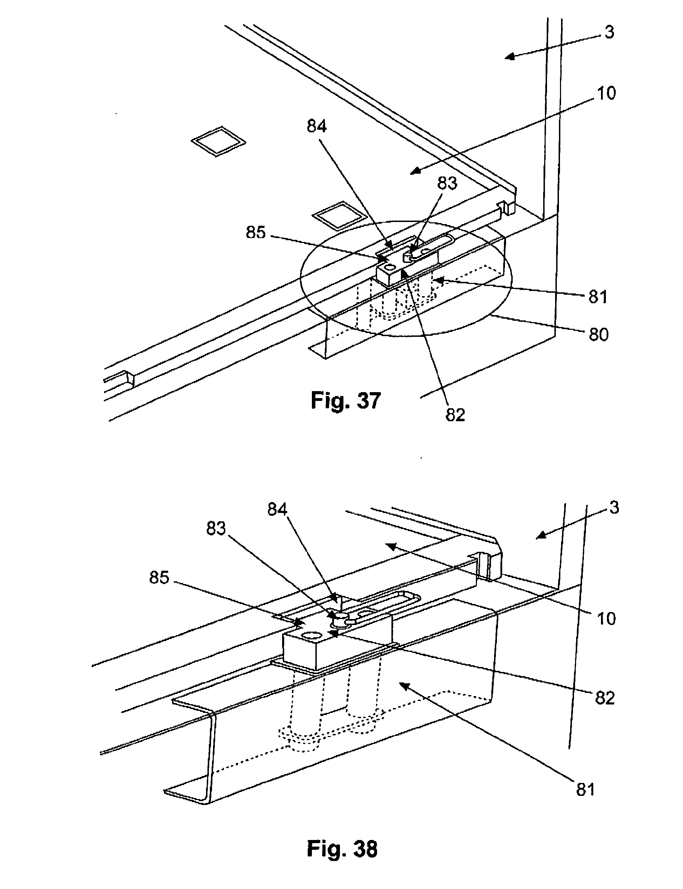

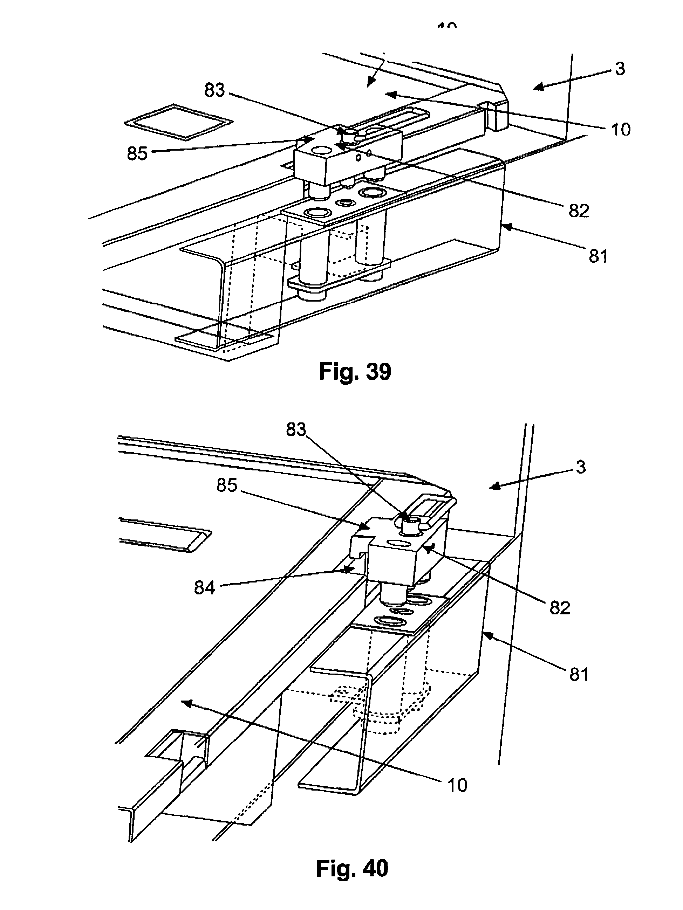

**Figuren 37 bis 40** zeigen eine schematische Ansicht einer Plattformsicherung 80, die eine Aussparung 84 an der Plattform 10, ein abnehmbares Verriegelungselement 82 sowie einen Befestigungseinsatz 81 am LKW 3 aufweist. Dabei ist der Befestigungseinsatz 81 an jedem beliebigen handelsüblichen LKW 3 durch einen nachträglichen Umbau vorzusehen, könnte allerdings auch vom LKW-Hersteller bereits vorgesehen sein. Hierbei kann der Befestigungseinsatz 81 je nach LKW-Model unterschiedlich ausfallen.

In den Befestigungseinsatz 81 wird zur Sicherung der Plattform 10 das abnehmbare Verriegelungselement 82 eingeführt. Um das abnehmbare Verriegelungselement 82 dabei gegen Bewegungen vertikal zur Plattform 10 zu sichern, kann das abnehmbare Verriegelungselement 82 mittels einer Befestigungsschraube 83 in dem Befestigungseinsatz 81 gesichert werden. Hierdurch kann vermieden werden, dass sich das abnehmbare Verriegelungselement 82 z.B. durch Stöße während der Fahrt oder durch die Vibrationen des LKW-Motors während der Fahrt losrüttelt und aus dem Befestigungseinsatz 81 heraus bewegt.

In der Plattform 10 ist eine Aussparung 84 vorgesehen, in die ein Teil des abnehmbaren Verriegelungselements 82, als Riegel 85 bezeichnet, von oben eingeführt wird und so die Plattform 10 sicher mit dem LKW 3 verbindet. Dabei sind die Konturen und Maße der Aussparung 84 und des Riegels 85 derart aneinander angepasst, dass das abnehmbare Verriegelungselement 82 einfach eingeführt und entnommen werden kann, andererseits möglichst überhaupt keine Bewegung der Plattform 10 im gesicherten Zustand zustande kommen kann. Die Konturen von Aussparung 84 und Riegel 85 sind so zu gestalten, dass z.B. durch eine trapezförmige Kontur sowohl eine Bewegung der Plattform 10 in Fahrt- als auch gegen die Fahrtrichtung des LKWs 3 sicher verhindert wird. Es kann eine Plattformsicherung 80 für die Plattform 10 vorgesehen sein oder auch zwei oder mehrere Plattformsicherungen 80.

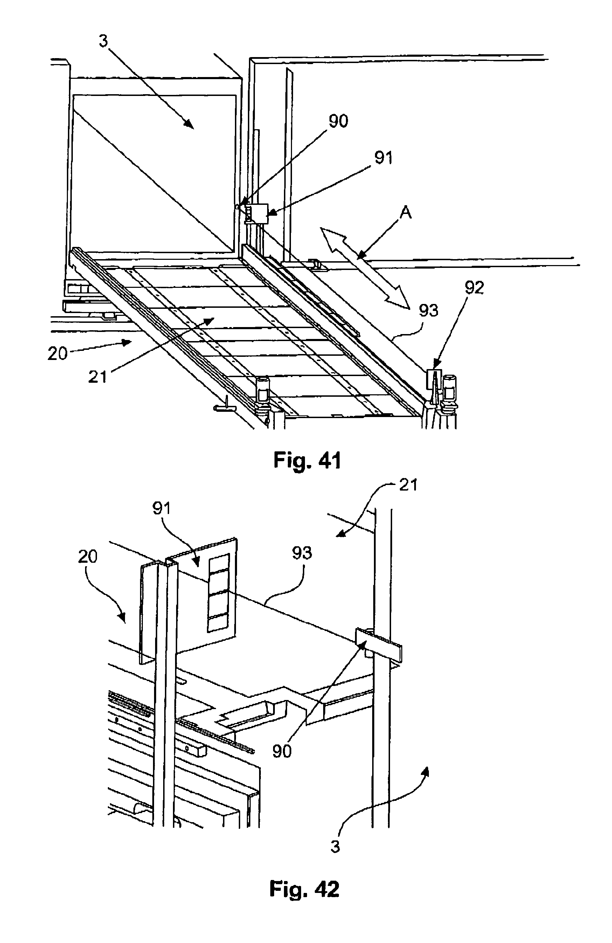

**Figur 41** zeigt eine schematische Ansicht eines Positioniersystems mit einer Laserstrahlquelle 90, einer ersten Markierungsaufnahme 91 und einer zweiten Markierungsaufnahme 92. Diese Positioniersystem ist geeignet, zur einfachen und kostengünstigen Ausrichtung der Ladefläche des LKWs 3 und der Aufnahme 21 der Übergabestation 20 verwendet zu werden. Die Laserstrahlquelle 90 wird dabei seitlich an der Rückseite des LKW 3 an einer entsprechenden Aufnahme, die bei jedem beliebigen LKW 3 einfach und kostengünstig nachgerüstet werden kann, montiert, siehe Figur 42. Bei der Anbringung der Aufnahme bzw. Montage der Laserstrahlquelle 90 ist es entscheidend, dass der Laserstrahl exakt in Richtung der Längsachse des LKW 3 von diesem weg ausgesendet wird, d.h. genau rechtwinklig zu der Rückseite des LKW 3. Nur bei einer exakten Ausrichtung der Laserstrahlquelle ist auch eine exakte Ausrichtung zwischen LKW 3 und Übergabestation 20 mittels des Laserstrahls der Laserstrahlquelle 90 möglich.

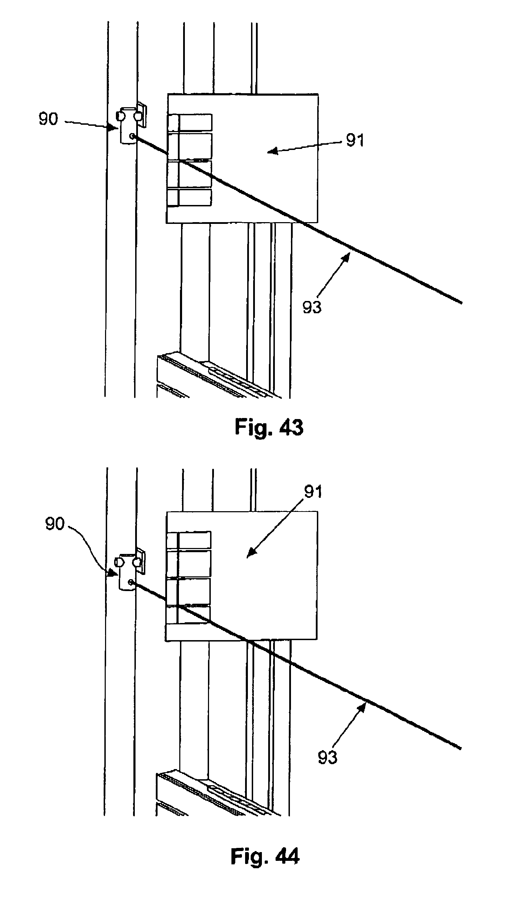

**Figur 43** zeigt eine schematische Darstellung der ersten Markierungsaufnahme 91 des Positioniersystems, die an dem vorderen Bereich der Übergabestation 20, d.h. an dem dem LKW 3 zugewandten Bereich der Übergabestation 20, vorgesehen ist. Dabei ist in dieser Ausführungsform die erste Markierungsaufnahme 91 als eine Plexiglasplatte ausgebildet, Die Markierungen der ersten Markierungsaufnahme 91 sind horizontal und vertikal verlaufende Linien, die z.B. dadurch ausgebildet werden, dass lediglich die Bereiche dieser linienförmigen Höhen- und Seitenmarkierungen durchsichtig ausgebildet werden während die restliche Plexiglasplatte absorbierend ausgebildet wird. Hierdurch zeigt die erste Markierungsaufnahme 91 in dem dargestellten Ausführungsbeispiel drei horizontale Höhenmarkierungen und eine vertikale Seitenmarkierung. Die untere, mittlere und obere Höhenmarkierung der ersten Markierungsaufnahme 91 sind in den **Figuren 43 bis 45** explizit ausgewiesen schematisch dargestellt.

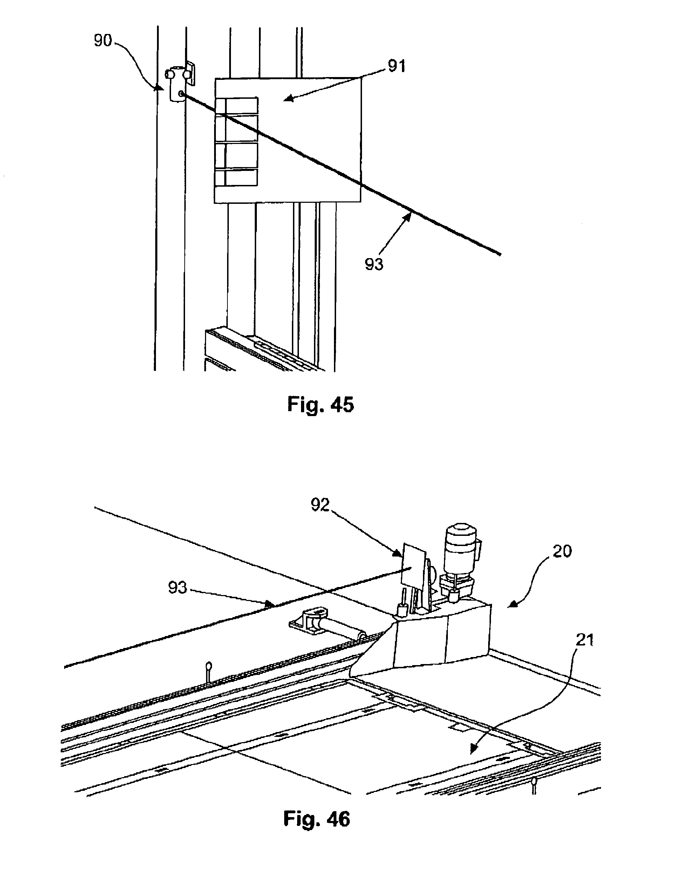

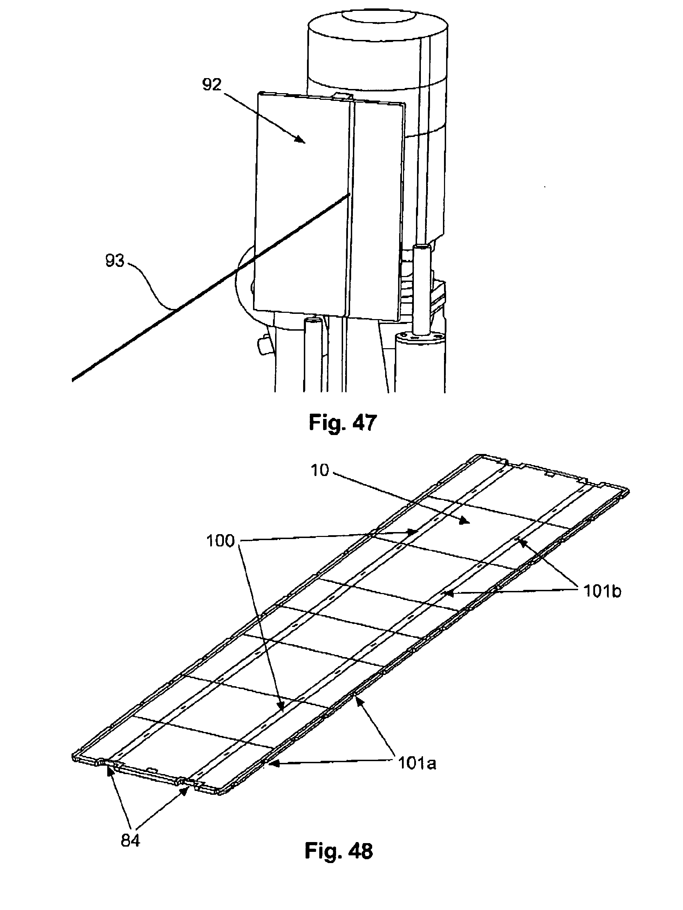

Die **Figuren 46** **und** **47** zeigen eine schematische Darstellung der zweiten Markierungsaufnahme 92, die an dem hinteren Bereich der Übergabestation 20, d.h. an dem dem LKW 3 abgewandten Bereich der Übergabestation 20, vorgesehen ist. Die zweite Markierungsaufnahme 92 ist als absorbierende Fläche ausgebildet, damit der Laserstrahl der Laserstrahlquelle 90 auf der zweiten Markierungsaufnahme 92 einen Laserpunkt ausbildet, falls der Laserstrahl durch eine der Höhenmarkierungen und bzw. oder Seitenmarkierung der ersten Markierungsaufnahme 91 hindurchtritt. Dabei ist zu beachten, dass die Seitenmarkierung der ersten Markierungsaufnahme 91 so ausgebildet ist, die Farbe des Laserstrahl zu verändern. Dies bedeutet, dass aufgrund der Farbe des Laserpunktes auf der zweiten Markierungsaufnahme 92 unterschieden werden kann, ob der Laserstrahl lediglich durch eine der Höhenmarkierungen hindurchgetreten ist - dann weist der Laserpunkt die Farbe des Laserstrahls auf, in der der Laserstrahl die Laserstrahlquelle 90 verlassen hat - oder ob der Laserstrahl gleichzeitig oder lediglich durch die Seitenmarkierung der ersten Markierungsaufnahme 91 hindurchgetreten ist - dann weist der Laserpunkt, wenn er auf die zweiten Markierungsaufnahme 92 trifft, eine andere Farbe entsprechend der Ausgestaltung der Seitenmarkierung auf, die er durchtreten hat.

Hierdurch kann aufgrund der Farbe des Laserpunktes auf der zweiten Markierungsaufnahme 92 unterschieden werden, ob durch den Laserpunkt lediglich die Ausrichtung der Übergabestation 20 auf einer bestimmten Höhe gegenüber der Ladefläche des LKWs 3 angezeigt wird oder ob - gleichzeitig oder alternativ - die richtige seitliche Ausrichtung oder richtige Winkelstellung um die Hochachse eingenommen ist, um die Übergabe von Plattformen 10 zwischen LKW 3 und Übergabestation 20 durchführen zu können.

Mittels dieses Positioniersystems kann ein Bediener beim Verfahren der Übergabestation 20 gegenüber dem LKW 3 zwecks Feinpositionierung und -ausrichtung schnell, einfach und zuverlässig erkennen, in welcher Richtung (seitlich und bzw. oder in der Höhe und bzw. oder schwenken um die Hochachse) er die Übergabestation 20 weiter verfahren bzw. schwenken muß, um die Aufnahme 21 der Übergabestation 20 gegenüber der Ladefläche des LKWs 3 exakt für die Übergabe von Plattformen 10 zu positionieren und auszurichten. Wird gar kein Laserpunkt auf der zweiten Markierungsaufnahme 92 abgebildet, so kann er durch die Abbildung eines Laserpunktes auf den absorbierenden Bereichen der ersten Markierungsaufnahme 91 erkennen, in welche Richtung in der Höhe er die Übergabestation 20 zu verfahren hat, um die gewünschte Höhe zu erreichen. Die gewünschte Höhe kann dabei die gleiche Höhe von Ladefläche des LKWs 3 und der Aufnahme 21 der Übergabestation 20 sein. Die gewünschte Höhe kann auch die gleiche Höhe der Oberkante einer Plattform 10 und der Ladefläche des LKWs 3 oder der Aufnahme 21 der Übergabestation 20 sein, falls eine Plattform 10 über eine andere Plattform 10 befördert werden soll. Daher weist die erste Markierungsaufnahme 91 mehrere Höhenmarkierungen auf, die um ein vielfaches der Höhe einer Plattform 10 übereinander angeordnet sind.

Wird die Übergabestation 20 von dem Bediener derart in der Höhe positioniert, dass der Laserstrahl durch eine der Höhenmarkierungen der ersten Markierungsaufnahme 91 hindurchtritt, so wird ein Laserpunkt solange auf der zweiten Markierungsaufnahme 92 abgebildet, solange beim weiteren Verfahren der Übergabestation 20 diese Höhe beibehalten wird. Auf dieser Höhe kann die Übergabestation 20 nun seitlich so weit verfahren werden, bis sich die Farbe der Laserpunktes verändert. Hierdurch wird angezeigt, dass der Laserstrahl der Laserquelle 90 durch die Seitenmarkierung der ersten Markierungsaufnahme 91 hindurchtritt. Nun kann die Übergabestation 20 so um die eigene Hochachse geschwenkt werden, bis der farbige Laserpunkt auf der Seitenmarkierung der zweiten Markierungsaufnahme 92 abgebildet wird. In dieser Konfiguration sind die Höhe der Übergabestation 20 und des LKWs 3 aufeinander wie gewünscht auf ein vielfaches der Höhe einer Plattform 10 abgestimmt, die Übergabestation 20 seitlich mit den Maßen der Ladefläche des LKWs 3 in Übereinstimmung gebracht und die Längsachsen der Übergabestation 20 und des LKWs 3 sind in Flucht zueinander. Nun können Plattformen 10 zwischen der Übergabestation 20 und dem LKW 3 ausgetauscht werden, ohne dass diese Plattformen 10 sich verklemmen oder verkanten oder mit dem LKW 3 oder der Übergabestation 10 aneinander stoßen.

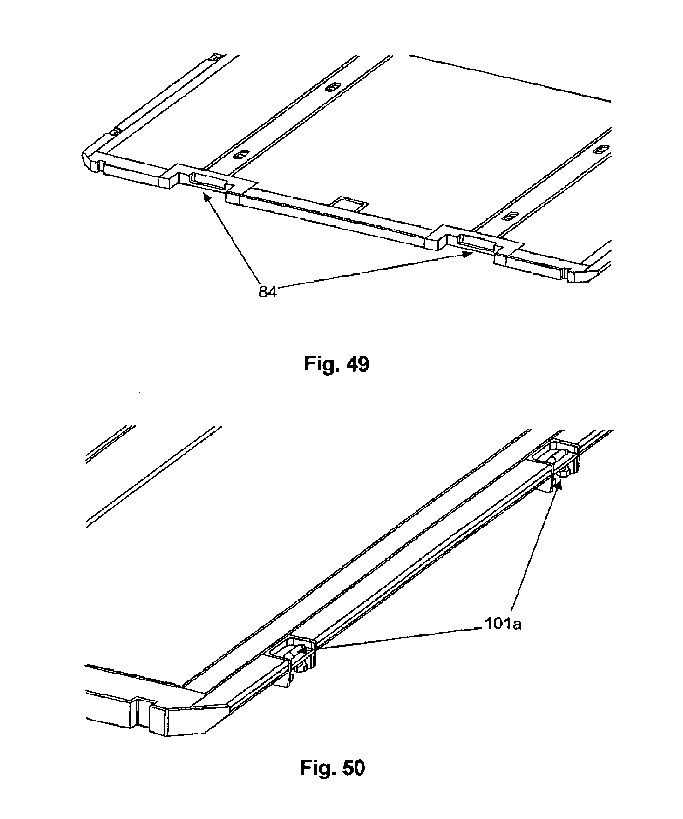

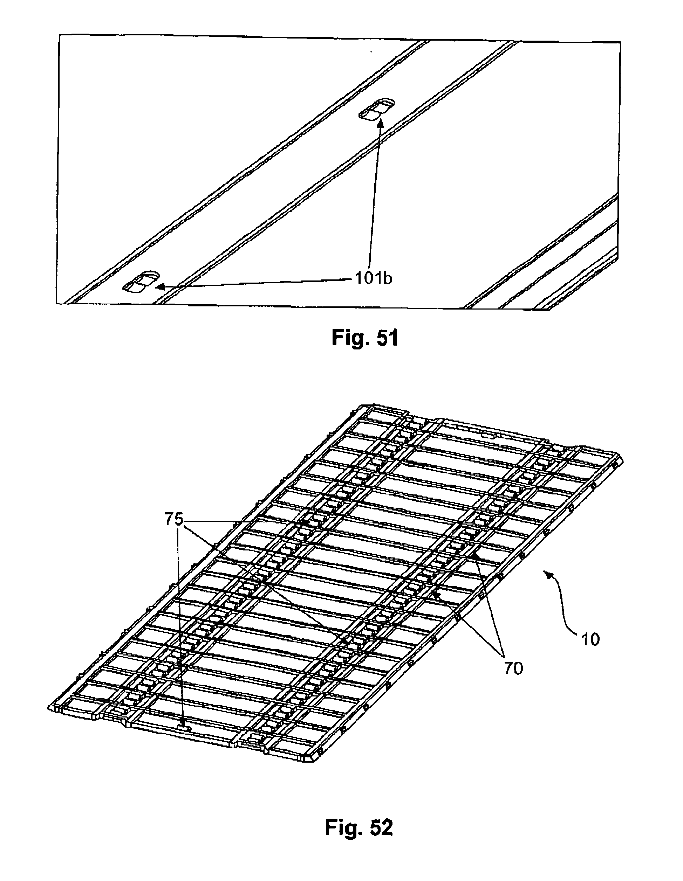

**Figur 48** zeigt eine schematische Darstellung eines bevorzugten Ausführungsbeispiels einer Plattform 10 des erfindungsgemäßen Logistiksystems. Dabei weist die Plattform 10 Aussparungen 84 zur Aufnahme einer Plattformsicherung 80 wie bereits oben beschrieben auf, siehe auch Figur 49. Ferner sind an den seitlichen Außenkanten der Plattform 10 Zurrpunkte 101a vorgesehen, um die Fracht 11 z.B. mittels Spanngurten auf der Plattform 10 zu sichern, siehe auch Figur 50. Die Plattform 10 dieses Ausführungsbeispiels weist ferner zwei Laufflächen 100 auf ihrer Oberseite auf, die z.B. aus Metall gefertigt sind. In diesen Laufflächen 100 sind ebenfalls Zurrpunkte 101 a eingelassen, um auch an diesen Punkten 101 die Fracht 11 sichern zu können, siehe auch Figur 51. Diese Laufflächen 100 dienen dazu, dass auf diesen Flächen 100 die Laufrollen 75 einer anderen Plattform 10 laufen können, wenn eine Plattform 10 über eine andere Plattform 10 befördert wird. Hierdurch wird für die Laufrollen 75 der oberen Plattform 10 eine definierte, ebene und gegen Beschädigung und Abnutzung beschützte Oberfläche zur Verfügung gestellt, um auch eine Beschädigung und Abnutzung der Laufrollen der oberen Plattform zu vermeiden bzw. zu reduzieren und eine leichtgängige und kraftsparende Beförderung der beiden Plattformen übereinander zu gewährleisten.

**Figur 52** zeigt eine schematische Darstellung der Unterseite einer Plattform 10. In dieser Unterseite sind Radkästen 70 eingelassen, in denen wiederum Räder 75 bzw. Laufrollen 75 vorgesehen sind. Dabei sind in dieser bevorzugten Ausführungsform der Plattform 10 pro Radkasten 70 zwei Räder 75 vorgesehen, die entsprechend mit einem geringeren Durchmesser ausfallen können als bei der Verwendung lediglich eines Rades 75 pro Radkasten 70. Hierdurch wird die Gewichtskraft der Plattform 10 und damit auch der Fracht 11 über doppelt so viele Kontaktpunkte auf den Untergrund übertragen als bei Verwendung von lediglich einem Rad 75 pro Radkasten 70. Ferner fällt auch der Abstand zwischen den Kontaktpunkten der Räder 75 bei der Verwendung doppelt so vieler Räder 75 deutlich geringer aus, so dass bei der Übergabe der Plattform 10 zwischen LKW 3 und Übergabestation 20 die Gewichtskraft auch gleichmäßiger übergeben werden kann und es bei dem LKW 3 zu keiner so deutlichen Absenkung kommt wie bei der Verwendung von weniger Rädern 75.

Die besonderen Vorteile der Erfindung bestehen darin, dass die LKW-Standzeiten an den Kommissionierungslagern verringert werden können, dass der Austausch von Waren bzw. Ladungsträgern schneller erfolgen kann, dass die gesamten Logistikkosten pro Ladungsträger sich weiter verringern lassen. Als einziger relavanter Nachteil könnte hier unter Umständen der Bedarf nach mehr Platz angesehen werden, denn, wie aus den Figuren erkennbar, wird für die Übergabestation bzw. den Bereich, in dem diese verfahren, Platz benötigt.

Ein weiterer Vorteil ist aber auch, dass dann, wenn eine Übergabestation einmal nicht funktionstüchtig ist, weiterhin die LKWs be- oder entladen werden können, nämlich über die bisherigen bekannten Techniken, indem die LKWs dann nämlich wie bisher rückwärts an die Hallentor heranfahren.

Hieraus erkennt man auch leicht, dass eine Mischform aus der bisher konventionellen Be- und Entladung der LKWs sowie aus dem erfindungsgemäßen Logistiksystem an ein und demselben Ort möglich ist, zumal das Schienensystem ohne weiteres auch von LKWs befahren werden kann, ohne dass das Schienensystem hierdurch Schaden nimmt.

## Patentansprüche

1. Logistiksystem zur Übergabe einer Plattform (10) in deren Beförderungsrichtung (A) zu einem Fahrzeug (3) und/oder zur Übernahme einer Plattform (10) von einem Fahrzeug (3).
wobei eine Plattformsicherung (80) vorgesehen ist, um die Plattform (10) mit dem Fahrzeug (3) zu fixieren,
**dadurch gekennzeichnet, dass** die Plattformsicherung (80) aufweist:
eine Aussparung (84) an der Plattform (10) an der Seite in Beförderungsrichtung (A), mit der die Plattform (10) zu der Öffnung der Ladefläche des Fahrzeugs (3) gerichtet ist,
einen Befestigungseinsatz (81) an dem Fahrzeug (3) an der Öffnung der Ladefläche in Beförderungsrichtung (A), und
ein abnehmbares Verriegelungselement (82) mit einem Riegel (85),
wobei das abnehmbare Verriegelungselement (82) in den Befestigungseinsalz (81) des Fahrzeugs (3) so eingeführt werden kann, dass der Riegel (85) des abnehmbaren Verriegelungselements (82) von oben In die Aussparung (84) der Plattform (10) eingreift, und
wobei die Konturen und Maße der Aussparung (84) und des Riegels (85) derart aneinander angepasst sind, dass eine Bewegung der Plattform (10) in Fahrtrichtung und entgegen der Fahrtrichtung des Fahrzeugs sicher verhindert wird.

2. Logistiksystem nach Anspruch 1,
wobei die Plattform (10) im Wesentlichen Ausmaße aufweist, die der Ladefläche des Fahrzeugs (3) angepasst sind,
wobei das Logistiksystem eine Übergabestation (4) für die Plattform (10) aufweist, um die Plattform (10) von einem Lager (1) oder einer Kommissionierungseinheit oder dergl. zu übernehmen oder dorthin zu übergeben,
wobei die Übergabestation (4) eine Aufnahme aufweist, auf der die Plattform (10) zur Anlage kommt und von der die Plattform (10) zum Fahrzeug (3) und/oder von dort weg und/oder vom Lagerbereich (1) und/oder dorthin förderbar ist und
wobei die Übergabestation (4) in der Lage ist, sich auf das Fahrzeug (3) und/oder den Lagerbereich (1), Kommissionierungsbereich oder dergl. auszurichten,
die Übergabestation (4) in einer Richtung quer zur Beförderungsrichtung der Plattform (10) zum Fahrzeug (3) bzw. zum Lagerbereich (1) verfahrbar ist und zwar soweit verfahrbar ist, dass die Übergabestation (4) an mehreren, parallel zueinander liegenden Andockstationen (2a, 2b) des Lagerbereichs (1), Kommissionierungsbereichs oder dergl. Plattformen (10) aufnehmen kann oder dorthin übergeben kann.

3. Logistiksystem nach Anspruch 2,
**dadurch gekennzeichnet, dass** die Übergabestation (4) aus einem Fahrwerk (9) besteht, mittels welchem die Übergabestation (4) entlang ihrer Bewegungsrichtung verfahrbar ist, und
dass das Fahrwerk (9) eine Unterkonstruktion (7) aufnimmt, die ihrerseits wiederum eine Oberkonstruktion (8) aufnimmt,
wobei auf der Oberkonstruktion (8) die Plattformübernahme ruht.

4. Logistiksystem nach einem der vorhergehenden Ansprüche 2, 3, **dadurch gekennzeichnet,**
**dass** die Übergabestation (4) oder Teile hiervon, z. B. die Oberkonstruktion (8), derart verschwenkbar ist, dass sie sich auf die Ladefläche des Fahrzeugs (3) und/oder den Aufnahmebereich von Plattform (10) im Lagerbereich (1), Kommissionierungsbereich oder dergl. derart einstellen kann, dass die Plattform (10) nur noch linear und horizontal in die vorbestimmte Transportrichtung verschiebbar ist.

5. Logistiksystem nach einem der vorhergehenden Ansprüche 2-4, **dadurch gekennzeichnet,**
**dass** die Übergabestation (4) mit einer Einhausung zum Wetterschutz der Plattform (10) bzw. der auf der Plattform (10) befindlichen Güter versehen und
**dass** die Einhausung bevorzugt von der Oberkonstruktion (8) oder Unterkonstruktion (7) aufgenommen wird.

6. Logistiksystem nach einem der vorstehenden Ansprüche 2-5,
wobei die Ausmaße der Plattform (10) an denen der Ladefläche des Fahrzeugs (3) angepasst sind,
wobei das Logistiksystem eine Übergabestation (20) für die Plattform (10) aufweist, um die Plattform (10) in Beförderungsrichtung (A) von dem Fahrzeug (3) zu übernehmen oder dorthin zu übergeben, und
wobei die Übergabestation (20) eine Aufnahme (21) aufweist, auf der die Plattform (10) zur Anlage kommt und von der die Plattform (10) in Beförderungsrichtung (A) zu dem Fahrzeug (3) und/oder von dem Fahrzeug (3) beförderbar ist,
die Aufnahme (21) so ausgebildet ist, dass die Aufnahme (21) mindestens zwei Plattformen (10) in der Beförderungsrichtung (A) parallel zueinander aufnehmen kann,
die Aufnahme (21) eine Längsvorschubeinheit (31) besitzt, um eine Plattform (10) in Beförderungsrichtung (A) zu dem Fahrzeug (3) oder von dem Fahrzeug (3) zu bewegen, und
die Aufnahme (21) eine Quervorschubeinheit (32) besitzt, um die Aufnahme (21) in Richtung (B) quer zur Beförderungsrichtung (A) zu bewegen.

7. Logistiksystem nach einem der vorstehenden Ansprüche 2-6,
wobei das Logistiksystem eine Übergabestation (20) mit einer Aufnahme (21) für die Plattform (10) aufweist, um die Plattform (10) in Beförderungsrichtung (A) von dem Fahrzeug (3) zu übernehmen oder dorthin zu übergeben, und
die Übergabestation (20) an seiner dem LKW (3) zugewandten Seite mindestens einen Abstandssensor aufweist, um den Abstand zwischen Übergabestation (20) und LKW (3) zu bestimmen.

8. Logistiksystem nach einem der vorstehenden Ansprüche 2-7,
wobei das Logistiksystem eine Übergabestation (20) mit einer Aufnahme (21) für die Plattform (10) aufweist, um die Plattform (10) in Beförderungsrichtung (A) von dem Fahrzeug (3) zu übernehmen oder dorthin zu übergeben,
die Übergabestation (20) einen Positionsfinder (50) aufweist, der an der Übergabestation (20) unterhalb der Aufnahme (21) in Beförderungsrichtung (A) an der Seite der Übergabestation (20) vorgesehen ist, an der das Fahrzeug (3) zu positionieren ist, um die Plattform (10) zu übernehmen oder zu übergeben, und
das Fahrzeug (3) an seiner Rückseite unterhalb der Ladefläche einen Reflektor (52) aufweist.

9. Logistiksystem nach einem der vorstehenden Ansprüche 2-8,
wobei das Logistiksystem eine Übergabestation (20) mit einer Aufnahme (21) für die Plattform (10) aufweist, um die Plattform (10) in Beförderungsrichtung (A) von dem Fahrzeug (3) zu übernehmen oder dorthin zu übergeben,
die Übergabestation (20) ein Lichtgitter (53) aufweist, das in Beförderungsrichtung (A) vor der Seite der Übergabestation (20) vorgesehen ist, an der das Fahrzeug (3) zu positionieren ist, um die Plattform (10) zu übemehmen oder zu übergeben, und
das Lichtgitter (53) derart in der Richtung quer zur Beförderungsrichtung (A) beabstandet ist, dass das Fahrzeug (3) mit seinem Aufbau rückwärts in das Lichtgitter (53) hineinfahren kann.

10. Logistiksystem nach einem der vorstehenden Ansprüche 2-9,
wobei das Logistiksystem eine Übergabestation (20) mit einer Aufnahme (21) für die Plattform (10) aufweist, um die Plattform (10) in Beförderungsrichtung (A) von dem Fahrzeug (3) zu übernehmen oder dorthin zu übergeben,
die Übergabestation (20) einen mehrdimensionalen Laserscanner (51) aufweist, der in Beförderungsrichtung (A) vor der Seite der Übergabestation (20) vorgesehen ist, an der das Fahrzeug (3) zu positionieren ist, um die Plattform (10) zu übernehmen oder zu übergeben.

11. Logistiksystem nach einem der vorstehenden Ansprüche 2-10,
wobei das Logistiksystem eine Übergabestation (20) mit einer Aufnahme (21) für die Plattform (10) aufweist, um die Plattform (10) in Beförderungsrichtung (A) von dem Fahrzeug (3) zu übernehmen oder dorthin zu übergeben,
wobei die Übergabestation (20) mindestens eine Kette (60) aufweist, um die Plattform (10) in Beförderungsrichtung (A) zu bewegen,
wobei die Kette (60) mehrere Mitnahmelaschen (63), mehrere Kettenbolzen (61) und mehrere verlängerte Kettenbolzen (62) aufweist, und
die Übergabestation (20) mindestens eine seitliche Kettenführung (65) aufweist, um die Kette (60) seitlich in Beförderungsrichtung (A) zu stabilisieren.

12. Logistiksystem nach einem der vorstehenden Ansprüche 2-11,
wobei das Logistiksystem eine Übergabestation (20) mit einer Aufnahme (21) für die Plattform (10) aufweist, um die Plattform (10) in Beförderungsrichtung (A) von dem Fahrzeug (3) zu übernehmen oder dorthin zu übergeben,
wobei die Plattform (10) mehrere Räder (75) aufweist, um auf diesen Rädern (75) in Beförderungsrichtung (A) verfahren zu werden, und
die Räder (75) in entsprechenden Radkästen (70) auf der Unterseite der Plattform (10) in die Plattform (10) eingelassen vorgesehen sind.

13. Logistiksystemnach einem der vorstehenden Ansprüche 2-12,
wobei das Logistiksystem eine Übergabestation (20) mit einer Aufnahme (21) für mindestens eine Plattform (10) aufweist, um eine Plattform (10) in Beförderungsrichtung (A) von dem Fahrzeug (3) zu übernehmen oder dorthin zu übergeben,
das Fahrzeug (3) eine Laserstrahlquelle (90) aufweist,
die Übergabestation (20) eine erste Markierungsaufnahme (91) und eine zweite Markierungsaufnahme (92) aufweist, und
wobei die erste Markierungsaufnahme (91) derart ausgestaltet ist, dass der Laserstrahl der Laserstrahlquelle (90) durch die erste Markierungsaufnahme (91) hindurchtritt und auf die zweite Markierungsaufnahme (92) auftrifft.

14. Logistiksystem nach einem der vorstehenden Ansprüche 2-13,
wobei das Logistiksystem eine Übergabestation (20) mit einer Aufnahme (21) für mindestens eine Plattform (10) aufweist, um eine Plattform (10) in Beförderungsrichtung (A) von dem Fahrzeug (3) zu übernehmen oder dorthin zu übergeben,
die Plattform (10) auf ihrer Oberseite mehrere Laufflächen (100) und an Ihrer Unterseite mehrere Räder (75) aufweist, und
wobei die Laufflächen (100) und die Räder (75) derart übereinander angeordnet sind, dass die Räder (75) einer Plattform (10) auf den Laufflächen (100) einer anderen Plattform (100) laufen, wenn die eine Plattform (10) über die andere Plattform (10) befördert wird.

## Claims

1. Logistics system for transferring a platform (10) in its conveying direction (A) to a vehicle (3) and/or for removing a platform (10) from a vehicle (3),
in which a platform securing device (80) is provided in order to fix the platform (10) to the vehicle (3),
**characterised in that** the platform securing device (80) comprises:
a recess (84) on the platform (10) on the side in conveying direction (A),
by means of which the platform (10) is directed to the opening of the loading area of the vehicle (3),
a fastening insert (81) on the vehicle (3) on the opening of the loading area in conveying direction (A) and
a removable locking element (82) with a bar (85),
the removable locking element (82) can be inserted into the fastening insert (81) of the vehicle (3) so that the bar (85) of the removable locking element (82) engages from above into the recess (84) of the platform (10) and
the contours and dimensions of the recess (84) and the bar (85) are adjusted to one another such that movement of the platform (10) is reliably prevented in travelling direction and opposite the travelling direction of the vehicle.

2. Logistics system according to claim 1,
in which the platform (10) essentially has dimensions which are adjusted to the loading area of the vehicle (3),
the logistics system comprises a transfer station (4) for the platform (10) in order to remove the platform (10) from a warehouse (1) or a picking unit or the like or transfer it to the latter,
the transfer station (4) comprises a mount on which the platform (10) comes to rest and from which the platform (10) can be conveyed to the vehicle (3) and/or away from the latter and/or from the storage area (1) and/or to the latter and
the transfer station (4) is able to be aligned to the vehicle (3) and/or the storage area (1), picking area or the like,
the transfer station (4) can be moved in a direction transverse to the conveying direction of the platform (10) to the vehicle (3) or to the storage area (1) and can be moved so far that the transfer station (4) can pick up on a plurality of parallel docking stations (2a, 2b) of the storage area (1), picking area or similar platforms (10) or can transfer thereto.

3. Logistics system according to claim 2, **characterised in that** the transfer station (4) consists of a chassis (9) by means of which the transfer station (4) can be moved along its direction of movement and **in that** the chassis (9) mounts a substructure (7) which in turn mounts a superstructure (8), the platform acquisition resting on the superstructure (8).

4. Logistics system according to one of the preceding claims 2, 3, **characterised in that** the transfer station (4) or parts of the latter, e.g. the superstructure (8), can be pivoted such that it can be adjusted to the loading area of the vehicle (3) and/or the mounting area of the platform (10) in the storage area (1), picking area or the like such that the platform (10) can only be moved linearly and horizontally in the predefined transport direction.

5. Logistics system according to one of the preceding claims 2 to 4, **characterised in that** the transfer station (4) is provided with a housing for protecting the platform (10) or the goods located on the platform (10) from the weather and **in that** the housing is preferably mounted by the superstructure (8) or substructure (7).

6. Logistics system according to one of the preceding claims 2 to 5, in which the dimensions of the platform (10) are adjusted to those of the loading area of the vehicle (3), the logistics system comprises a transfer station (20) for the platform (10) in order to move the platform (10) in conveying direction (A) from the vehicle or (3) or move it onto the latter and the transfer station (20) comprises a mount (21) on which the platform (10) is supported and by which the platform (10) can be conveyed in conveying direction (A) to the vehicle (3) and/or from the vehicle (3), the mount (21) is configured so that the mount (21) can hold at least two platforms (10) parallel to one another in the conveying direction (A),
the mount (21) has a longitudinal advancing unit (31) in order to remove a platform (10) in conveying direction (A) to the vehicle (3) or from the vehicle (3) and
the mount (21) has a transverse advancing unit (32) in order to move the mount (21) in direction (B) transverse to conveying direction (A).

7. Logistics system according to one of the preceding claims 2 to 6, in which the logistics system comprises a transfer station (20) with a mount (21) for the platform (10) in order to remove the platform (10) in conveying direction (A) from the vehicle (3) or transfer it to the latter and the transfer station (20) on its side facing the lorry (3) comprises at least one distance sensor in order to determine the distance between the transfer station (20) and lorry (3).

8. Logistics system according to one of the preceding claims 2 to 7, in which the logistics system comprises a transfer station (20) with a mount (21) for the platform (10) in order to remove the platform (10) in conveying direction (A) from the vehicle (3) or transfer it thereto,
the transfer station (20) has a position finder (50) which is provided at the transfer station (20) below the mount (21) in conveying direction (A) on the side of the transfer station (20) at which the vehicle (3) is to be positioned in order to remove the platform (10) or transfer it and
the vehicle (3) comprises a reflector (52) on its rear side below the loading area.

9. Logistics system according to one of the preceding claims 2 to 8, in which the logistics system comprises a transfer station (20) with a mount (21) for the platform (10) in order to remove the platform (10) in conveying direction (A) from the vehicle (3) or transfer it thereto,
the transfer station (20) comprises a light grid (53) which is provided in conveying direction (A) in front of the side of the transfer station (20) at which the vehicle (3) is to be positioned in order to remove the platform (10) or transfer it and
the light grid (53) is spaced apart in a direction transverse to the conveying direction (A) such that the vehicle (3) can drive with its mounting backwards into the light grid (53).

10. Logistics system according to one of the preceding claims 2 to 9, in which the logistics system comprises a transfer station (20) with a mount (21) for the platform (10) in order to remove the platform (10) in conveying direction (A) from the vehicle (3) or transfer it thereto,
the transfer station (20) has a multidimensional laser scanner (51) which is provided in conveying direction (A) in front of the side of the transfer station (20) at which the vehicle (3) is to be positioned in order to remove the platform (10) or transfer it.

11. Logistics system according to one of the preceding claims 2 to 10, in which the logistics system comprises a transfer station (20) with a mount (21) for the platform (10) in order to remove the platform (10) in conveying direction (A) from the vehicle (3) or transfer it thereto,
the transfer station (20) comprises at least one chain (60) in order to remove the platform (10) in conveying direction (A),
the chain (60) comprises a plurality of carrying tabs (63), a plurality of chain bolts (61) and a plurality of lengthened chain bolts (62) and
the transfer station (20) comprises at least one lateral chain guide (65) in order to stabilise the chain (60) laterally in conveying direction (A).

12. Logistics system according to one of the preceding claims 2 to 11, in which the logistics system comprises a transfer station (20) with a mount (21) for the platform (10) in order to remove the platform (10) in conveying direction (A) from the vehicle (3) and transfer it thereto,
the platform (10) comprises a plurality of wheels (75) on order to move on said wheels (75) in conveying direction (A) and
the wheels (75) are provided sunk into the platform (10) in corresponding wheel housings (70) on the lower side of the platform (10).

13. Logistics system according to one of the preceding claims 2 to 12, in which the logistics system comprises a transfer station (20) with a mount (21) for at least one platform (10) in order to remove a platform (10) in conveying direction (A) from the vehicle (3) and transfer it thereto,
the vehicle (3) comprises a laser beam source (90),
the transfer station (20) comprises a first marking mount (91) and a second marking mount (92) and
the first marking mount (91) is configured such that the laser beam of the laser beam source (90) passes through the first marking mount (91) and reaches the second marking mount (92).

14. Logistics system according to one of the preceding claims 2 to 13, in which the logistics system comprises a transfer station (20) with a mount (21) for at least one platform (10) in order to remove a platform (10) in conveying direction (A) from the vehicle (3) or transfer it to the latter, the platform (10) comprises a plurality of running surfaces (100) on its upper side and a plurality of wheels (75) on its lower side and
the running surfaces (100) and the wheels (75) are arranged above one another such that the wheels (75) of a platform run on the running surfaces (100) of a different platform (100) if one platform (10) is conveyed over the other platform (10).

## Revendications

1. Système logistique pour transférer une plate-forme (10) dans la direction d'acheminement (A) de cette dernière vers un véhicule (3) et/ou pour recevoir une plate-forme (10) d'un véhicule (3),
dans lequel un système de fixation de plate-forme (80) est prévu pour fixer la plate-forme (10) au véhicule (3),
**caractérisé en ce que** le système de fixation de plate-forme (80) présente :
un évidement (84) sur la plate-forme (10) au niveau du côté dans la direction d'acheminement (A), à l'aide duquel la plate-forme (10) est orientée par rapport à l'ouverture de la surface de chargement du véhicule (3),
un insert de fixation (81) au niveau du véhicule (3) au niveau de l'ouverture de la surface de chargement dans la direction d'acheminement (A), et
un élément de verrouillage (82) amovible comprenant un verrou (85),
dans lequel l'élément de verrouillage (82) amovible peut être introduit dans l'insert de fixation (81) du véhicule (3) de telle manière que le verrou (85) de l'élément de verrouillage (82) amovible vienne en prise depuis le haut avec l'évidement (84) de la plate-forme (10),
et
dans lequel les contours et les dimensions de l'évidement (84) et du verrou (85) sont adaptés les uns aux autres de telle manière qu'un mouvement de la plate-forme (10) soit empêché avec fiabilité dans le sens de la marche et dans la direction opposée au sens de la marche du véhicule.

2. Système logistique selon la revendication 1, dans lequel la plate-forme (10) présente essentiellement des dimensions qui sont adaptées à la surface de chargement du véhicule (3),
dans lequel le système logistique présente une station de transfert (4) pour la plate-forme (10) afin de recevoir la plate-forme (10) d'un entrepôt (1) ou d'une unité de préparation de commandes ou similaire ou de l'y transférer,
dans lequel la station de transfert (4) présente un système de réception, sur lequel la plate-forme (10) vient en appui et depuis lequel la plate-forme (10) peut être acheminée en direction du véhicule (3) et/ou de manière à s'en éloigner et/ou en provenance de la zone d'entreposage (1) et/ou vers cette dernière, et
dans lequel la station de transfert (4) est en mesure de s'orienter sur le véhicule (3) et/ou sur la zone d'entreposage (1), sur la zone de préparation des commandes ou similaire,
dans lequel la station de transfert (4) peut être déplacée dans une direction transversale au sens d'acheminement de la plate-forme (10) en direction du véhicule (3) ou vers la zone d'entreposage (1), à savoir peut être déplacée si loin que la station de transfert (4) peut recevoir des plates-formes (10) au niveau de plusieurs stations de raccordement (2a, 2b) parallèles les unes aux autres de la zone d'entreposage (1), de la zone de préparation des commandes ou similaire ou peut les y transférer.

3. Système logistique selon la revendication 2,
**caractérisé en ce que** la station de transfert (4) est constituée d'un train de roulement (9), au moyen duquel la station de transfert (4) peut être déplacée le long de sa direction de déplacement, et
**en ce que** le train de roulement (9) reçoit une structure inférieure (7) qui reçoit de son côté à nouveau une structure supérieure (8),
dans lequel le système de réception de plate-forme repose sur la structure supérieure (8).

4. Système logistique selon l'une quelconque des revendications 2, 3, **caractérisé en ce**
**que** la station de transfert (4) ou des parties de cette dernière, par exemple la structure supérieure (8), peuvent être pivotées de telle manière qu'elles peuvent s'ajuster sur la surface de chargement du véhicule (3) et/ou sur la zone de réception de la plate-forme (10) dans la zone d'entreposage (1), dans la zone de préparation des commandes ou similaire de telle manière que la plate-forme (10) peut encore être déplacée par coulissement uniquement de manière linéaire et de manière horizontale dans le sens de transport prédéterminé.

5. Système logistique selon l'une quelconque des revendications précédentes 2 à 4, **caractérisé en ce**
**que** la station de transfert (4) est pourvue d'une enceinte pour protéger la plate-forme (10) ou les articles se trouvant sur la plate-forme (10) des intempéries, et
en ce que l'enceinte est reçue de manière préférée par la structure supérieure (8) ou par la structure inférieure (7).

6. Système logistique selon l'une quelconque des revendications 2 à 5,
dans lequel les dimensions de la plate-forme (10) sont adaptées à celles de la surface de chargement du véhicule (3),
dans lequel le système logistique présente une station de transfert (20) pour la plate-forme (10) afin de recevoir la plate-forme (10) dans la direction d'acheminement (A) du véhicule (3) ou de l'y transférer, et
dans lequel la station de transfert (20) présente un système de réception (21), sur lequel la plate-forme (10) vient en appui et depuis lequel la plate-forme (10) peut être acheminée dans la direction d'acheminement (A) vers le véhicule (3) et/ou depuis le véhicule (3),
dans lequel le système de réception (21) est réalisé de telle manière que ledit système de réception (21) peut recevoir au moins deux plates-formes (10) parallèles entre elles dans la direction d'acheminement (A),
que le système de réception (21) comporte une unité d'avancée longitudinale (31) afin de déplacer une plate-forme (10) dans la direction d'acheminement (A) en direction du véhicule (3) ou depuis le véhicule (3), et
que le système de réception (21) comporte une unité d'avancée transversale (32) afin de déplacer le système de réception (21) dans le sens (B) de manière transversale par rapport au sens d'acheminement (A).

7. Système logistique selon l'une quelconque des revendications précédentes 2 à 6,
dans lequel le système logistique présente une station de transfert (20) dotée d'un système de réception (21) pour la plate-forme (10) afin de recevoir la plate-forme (10) dans la direction d'acheminement (A) du véhicule (3) ou de l'y transférer, et
la station de transfert (20) présente, au niveau de son côté tourné vers le PL (3), au moins un capteur de distance, afin de déterminer la distance entre la station de transfert (20) et le PL (3).

8. Système logistique selon l'une quelconque des revendications 2 à 7,
dans lequel le système logistique présente une station de transfert (20) dotée d'un système de réception (21) pour la plate-forme (10) afin de recevoir la plate-forme (10) dans la direction d'acheminement (A) du véhicule (3) ou de l'y transférer,
dans lequel la station de transfert (20) présente un localiseur de position (50), qui est prévu au niveau de la station de transfert (20), sous le système de réception (21), dans la direction d'acheminement (A) sur le côté de la station de transfert (20), au niveau duquel le véhicule (3) doit être positionné afin de recevoir ou de transférer la plate-forme (10), et
dans lequel le véhicule (3) présente, sur son côté arrière, sous la surface de chargement, un réflecteur (52).

9. Système logistique selon l'une quelconque des revendications précédentes 2 à 8,
dans lequel le système logistique présente une station de transfert (20) dotée d'un système de réception (21) pour la plate-forme (10) afin de recevoir la plate-forme (10) dans la direction d'acheminement (A) du véhicule (3) ou de l'y transférer,
dans lequel la station de transfert (20) présente un réseau optique (53), qui est prévu dans la direction d'acheminement (A) en amont du côté de la station de transfert (20), au niveau duquel le véhicule (3) doit être positionné pour recevoir ou transférer la plate-forme (10), et
dans lequel le réseau optique (53) est espacé dans la direction transversale à la direction d'acheminement (A) de manière telle que le véhicule (3) puisse rentrer avec sa structure à l'arrière dans le réseau optique (53).

10. Système logistique selon l'une quelconque des revendications 2 à 9,
dans lequel le système logistique présente une station de transfert (20) dotée d'un système de réception (21) pour la plate-forme (10) afin de recevoir la plate-forme (10) dans la direction d'acheminement (A) du véhicule (3) ou de l'y transférer,
dans lequel la station de transfert (20) présente un scanner laser (51) multidimensionnel, qui est prévu dans la direction d'acheminement (A) en amont du côté de la station de transfert (20), au niveau duquel le véhicule (3) doit être positionné pour recevoir ou transférer la plate-forme (10).

11. Système logistique selon l'une quelconque des revendications précédentes 2 à 10,
dans lequel le système logistique présente une station de transfert (20) dotée d'un système de réception (21) pour la plate-forme (10) afin de recevoir la plate-forme (10) dans la direction d'acheminement (A) du véhicule (3) ou de l'y transférer,
dans lequel la station de transfert (20) présente au moins une chaîne (60) pour déplacer la plate-forme (10) dans la direction d'acheminement (A),
dans lequel la chaîne (60) présente plusieurs éclisses d'entraînement (63), plusieurs boulons de chaîne (61) et plusieurs boulons de chaîne (62) allongés, et
la station de transfert (20) présente au moins un guidage de chaîne (65) latéral, afin de stabiliser la chaîne (60) latéralement dans la direction d'acheminement (A).

12. Système logistique selon l'une quelconque des revendications 2 à 11,
dans lequel le système logistique présente une station de transfert (20) dotée d'un système de réception (21) pour la plate-forme (10) afin de recevoir la plate-forme (10) dans la direction d'acheminement (A) du véhicule (3) ou de l'y transférer,
dans lequel la plate-forme (10) présente plusieurs roues (75) afin d'être déplacée sur lesdites roues (75) dans la direction d'acheminement (A), et
les roues (75) sont prévues de manière encastrée dans la plate-forme (10) dans des passages de roue (70) correspondants sur le côté inférieur de la plate-forme (10).

13. Système logistique selon l'une quelconque des revendications précédentes 2 à 12,
dans lequel le système logistique présente une station de transfert (20) dotée d'un système de réception (21) pour au moins une plate-forme (10) afin de recevoir une plate-forme (10) dans la direction d'acheminement (A) du véhicule (3) ou de l'y transférer,
le véhicule (3) présente une source de rayonnement laser (90),
la station de transfert (20) présente un premier système de réception de marquage (91) et un deuxième système de réception de marquage (92), et
dans lequel le premier système de réception de marquage (91) est configuré de telle manière que le rayonnement laser de la source de rayonnement laser (90) traverse le premier système de réception de marquage (91) et atteint le deuxième système de réception de marquage (92).

14. Système logistique selon l'une quelconque des revendications 2 à 13,
dans lequel le système logistique présente une station de transfert (20) dotée d'un système de réception (21) pour au moins une plate-forme (10) afin de recevoir une plate-forme (10) dans la direction d'acheminement (A) du véhicule (3) ou de l'y transférer,
dans lequel la plate-forme (10) présente sur son côté supérieur plusieurs surfaces de roulement (100) et sur son côté inférieur plusieurs roues (75), et
dans lequel les surfaces de roulement (100) et les roues (75) sont disposées de manière superposée de telle manière que les roues (75) d'une plate-forme (10) roulent sur les surfaces de roulement (100) d'une autre plate-forme (100) lorsqu'une plate-forme (10) est acheminée sur l'autre plate-forme (10).
